# EUROPEAN PATENT APPLICATION

(11) **EP 2 509 145 A1**
(43) Date of publication of application: **10.10.2012**
(21) Application number: 10834381.5
(22) Date of filing: 01.12.2010
(51) Int. Cl.: H01M 8/04, H01M 8/06, H01M 8/10

(54) **FUEL CELL SYSTEM AND METHOD OF CONTROLLING FUEL CELL SYSTEM**

(30) Priority: 01.12.2009 JP 2009273081
(71) Applicant: Panasonic Corporation, Kadoma-shi Osaka 571-8501 (JP)
(72) Inventor: TANAKA, Yoshikazu, Chuo-ku Osaka 540-6207 (JP); NAKAMURA, Akinari, Chuo-ku Osaka 540-6207 (JP); URATA, Takayuki, Chuo-ku Osaka 540-6207 (JP)
(74) Representative: Grünecker, Kinkeldey, Stockmair & Schwanhäusser
(86) International application number: PCT/JP2010/007009
(87) International publication number: WO 2011/067927

(57) **Abstract**

A fuel cell system according to the present invention includes: a hydrogen generator (2); a burner (3); an air supply device (6); a fuel cell (1); a condenser (4) configured to condense an exhaust reducing gas to recover condensed water, the exhaust reducing gas being discharged from the fuel cell (1); a condensed water tank (7) configured to store the condensed water recovered by the condenser (4); a water level detector (22) configured to detect a water level in the condensed water tank (7); a degasifier (9) configured to remove a carbonic acid component contained in the condensed water by using an exhaust oxidizing gas discharged from the fuel cell (1); a water conveyance passage (8) configured to connect the condensed water tank (7) and the degasifier (9) and including a water sealing structure (8A) at a portion thereof; a water level changing unit configured to change the water level in the condensed water tank (7); and a controller (15), and the controller (15) causes the water level changing unit to change the water level in the condensed water tank (7), and when the water level detector (22) has detected the change of the water level, the controller determines that the water level detector (22) is normally operating.

## Description

### Technical Field

The present invention relates to a fuel cell system including a fuel cell, such as a polymer electrolyte fuel cell or a phosphoric-acid fuel cell, and configured to supply electricity and a method of controlling the fuel cell system.

### Background Art

In conventional fuel cell systems, after water generated in the system is recovered and deionized by a purifier, the water is supplied to a hydrogen generator to be reused in a steam-reforming reaction (see PTL 1, for example). Further, hydrogen in an exhaust reducing gas discharged from a fuel cell is combusted in a burner, and water recovered from its flue gas is degassed by an exhaust oxidizing gas (see PTL 2, for example).

A fuel cell system is known, which aims to improve the stability of a water self-sustaining operation by simple control and reduce a maintenance cost (see PTL 3, for example). According to a fuel cell system disclosed in PTL 3, when the water level in a recovered water tank detected by a water level sensor is lower than a set water level, the amount of air supplied per unit time to a cathode of a fuel cell is reduced to increase an air utilization ratio of the fuel cell. When the water level in the recovered water tank is higher than the set water level, the amount of air supplied per unit time to the cathode of the fuel cell is increased to reduce the air utilization ratio of the fuel cell.

Further, a fuel cell system is known, which includes a water level sensor configured to detect the water level in a waste water tank by utilizing an electrostatic capacity and aims to control the water level in the waste water tank within a control range even if the quality of the water in the waste water tank is changed (see PTL 4, for example). According to the fuel cell system disclosed in PTL 4, as the number of times of the water discharge since the start-up of the fuel cell system increases, the lowest water level is lowered.

### Citation List

### Patent Literature

PTL 1: Japanese Patent No. 2854171
PTL 2: Japanese Laid-Open Patent Application Publication No. 2004-172016
PTL 3: Japanese Laid-Open Patent Application Publication No. 2008-234869
PTL 4: Japanese Laid-Open Patent Application Publication No. 2007-207556

### Summary of Invention

### Technical Problem

However, in the fuel cell system disclosed in each of PTLs 3 and 4, one problem is that whether or not the water level detected by the water level sensor is normal cannot be determined. Then, in the fuel cell system disclosed in each of PTLs 3 and 4, another problem is that the object of each of PTLs 3 and 4 cannot be achieved when the water level detected by the water level sensor is abnormal.

The present invention was made to solve the above problems, and a first object of the present invention is to provide a fuel cell system capable of determining whether or not a water level sensor provided in a condensed water tank is normally operating and a method of controlling the fuel cell system.

A second object of the present invention is to provide a fuel cell system capable of specifying a portion where an abnormality has occurred, the portion being a portion of a water flow passage of the fuel cell system, and a method of controlling the fuel cell system.

### Solution to Problem

To solve the above conventional problems, a fuel cell system according to the present invention includes: a hydrogen generator configured to generate a hydrogen-containing reducing gas by steam reforming using a raw material gas and water; a burner configured to perform combustion to generate heat necessary for the steam reforming; an air supply device configured to supply an oxidizing gas; a fuel cell configured to cause the reducing gas generated in the hydrogen generator and the oxidizing gas supplied from the air supply device to electrochemically react with each other to generate electric power; a condenser configured to condense an exhaust reducing gas to recover condensed water, the exhaust reducing gas being discharged from the fuel cell; a condensed water tank configured to store the condensed water recovered by the condenser; a water level detector configured to detect a water level in the condensed water tank; a degasifier configured to remove a carbonic acid component contained in the condensed water by using an exhaust oxidizing gas discharged from the fuel cell; a water conveyance passage configured to connect the condensed water tank and the degasifier and including a water sealing structure at a portion thereof; a water level changing unit configured to change the water level of the condensed water in the condensed water tank; and a controller, wherein the controller causes the water level changing unit to change the water level in the condensed water tank, and when the water level detector has detected the change of the water level, the controller determines that the water level detector is normally operating.

With this, whether or not the water level sensor provided in the condensed water tank is normally operating can be determined, and the fuel cell system can operate stably.

A fuel cell system control method according to the present invention is a method of controlling a fuel cell system, the fuel cell system including: a hydrogen generator configured to generate a hydrogen-containing reducing gas by steam reforming using a raw material gas and water; a burner configured to perform combustion to generate heat necessary for the steam reforming; an air supply device configured to supply an oxidizing gas; a fuel cell configured to cause the reducing gas generated in the hydrogen generator and the oxidizing gas supplied from the air supply device to electrochemically react with each other to generate electric power; a condenser configured to condense an exhaust reducing gas to recover condensed water, the exhaust reducing gas being discharged from the fuel cell; a condensed water tank configured to store the condensed water recovered by the condenser; a water level detector configured to detect a water level in the condensed water tank; a degasifier configured to remove a carbonic acid component contained in the condensed water by using an exhaust oxidizing gas discharged from the fuel cell; a water conveyance passage configured to connect the condensed water tank and the degasifier and including a water sealing structure at a portion thereof; a water level changing unit configured to change the water level of the condensed water in the condensed water tank, and a controller, wherein the controller causes the water level changing unit to change the water level in the condensed water tank, and when the water level detector has detected a change of the water level, the controller determines that the water level detector is normally operating.

With this, whether or not the water level sensor provided in the condensed water tank is normally operating can be determined, and the fuel cell system can operate stably.

### Advantageous Effects of Invention

According to the fuel cell system and fuel cell system control method of the present invention, whether or not the water level sensor provided in the condensed water tank is normally operating can be determined, and the fuel cell system can operate stably.

### Brief Description of Drawings

[Fig. 1] Fig. 1 is a block diagram schematically showing the schematic configuration of a fuel cell system according to Embodiment 1 of the present invention.
[Fig. 2] Fig. 2 is a flow chart schematically showing an operation check of a water level sensor in the fuel cell system according to Embodiment 1.
[Fig. 3] Fig. 3 is a block diagram schematically showing the schematic configuration of the fuel cell system according to Embodiment 2 of the present invention.
[Fig. 4] Fig. 4 is a flow chart schematically showing the operation check of the water level sensor in the fuel cell system according to Embodiment 2.
[Fig. 5] Fig. 5 is a block diagram schematically showing the schematic configuration of the fuel cell system according to Embodiment 3 of the present invention.
[Fig. 6] Fig. 6 is a flow chart schematically showing the operation check of the water level sensor in the fuel cell system according to Embodiment 3.
[Fig. 7] Fig. 7 is a block diagram schematically showing the schematic configuration of the fuel cell system according to Embodiment 4 of the present invention.
[Fig. 8] Fig. 8 is a block diagram schematically showing the schematic configuration of the fuel cell system according to Embodiment 5 of the present invention.
[Fig. 9] Fig. 9 is a flow chart schematically showing a water discharging operation in the fuel cell system according to Embodiment 5 of the present invention.
[Fig. 10] Fig. 10 is a flow chart schematically showing the operation check of the water level sensor in the fuel cell system according to Embodiment 6.
[Fig. 11] Fig. 11 is a flow chart schematically showing the operation check of the water level sensor in the fuel cell system according to Embodiment 7.
[Fig. 12] Fig. 12 is a block diagram schematically showing the schematic configuration of the fuel cell system according to Embodiment 8 of the present invention.
[Fig. 13] Fig. 13 is a flow chart schematically showing the operation check of a feed water valve in the fuel cell system according to Embodiment 8.
[Fig. 14] Fig. 14 is a block diagram schematically showing the schematic configuration of the fuel cell system according to Embodiment 9 of the present invention.
[Fig. 15] Fig. 15 is a flow chart schematically showing the operation check of a condensed water supply device in the fuel cell system according to Embodiment 9.
[Fig. 16] Fig. 16 is a flow chart schematically showing the operation check of the water level sensor in the fuel cell system according to Embodiment 10.
[Fig. 17] Fig. 17 is a flow chart schematically showing the operation check of an on-off valve in the fuel cell system according to Embodiment 11.
[Fig. 18] Fig. 18 is a block diagram schematically showing the schematic configuration of the fuel cell system according to Embodiment 12 of the present invention.
[Fig. 19] Fig. 19 is a flow chart schematically showing the operation check of the water level sensor in the fuel cell system of Modification Example 2.
[Fig. 20] Fig. 20 is a flow chart schematically showing the operation check of the on-off valve in the fuel cell system according to Embodiment 13.
[Fig. 21] Fig. 21 is a block diagram schematically showing the schematic configuration of the fuel cell system according to Embodiment 14 of the present invention.
[Fig. 22] Fig. 22 is a flow chart schematically showing the operation check of the water level sensor in the fuel cell system according to Embodiment 14.

### Description of Embodiments

A first aspect of the present invention is a fuel cell system comprising: a hydrogen generator configured to generate a hydrogen-containing reducing gas by steam reforming using a raw material gas and water; a burner configured to perform combustion to generate heat necessary for the steam reforming; an air supply device configured to supply an oxidizing gas; a fuel cell configured to cause the reducing gas generated in the hydrogen generator and the oxidizing gas supplied from the air supply device to electrochemically react with each other to generate electric power; a condenser configured to condense an exhaust reducing gas to recover condensed water, the exhaust reducing gas being discharged from the fuel cell; a condensed water tank configured to store the condensed water recovered by the condenser; a water level detector configured to detect a water level in the condensed water tank; a degasifier configured to remove a carbonic acid component contained in the condensed water by using an exhaust oxidizing gas discharged from the fuel cell; a water conveyance passage configured to connect the condensed water tank and the degasifier and including a water sealing structure at a portion thereof; a water level changing unit configured to change the water level of the condensed water in the condensed water tank; and a controller, wherein the controller causes the water level changing unit to change the water level in the condensed water tank, and when the water level detector has detected the change of the water level, the controller determines that the water level detector is normally operating.

With this, whether or not the water level sensor provided in the condensed water tank is normally operating can be determined, and the fuel cell system can operate stably.

A second aspect of the present invention is configured such that in the first aspect of the present invention, the water conveyance passage is formed such that an upstream end thereof is located on a vertically lower side of a downstream end thereof.

A third aspect of the present invention is configured such that in the second aspect of the present invention, the fuel cell system further includes: a combustion air supply unit configured to supply combustion air through a combustion air supply passage to the burner; and an exhaust reducing gas passage which connects the burner and the fuel cell and through which an exhaust reducing gas discharged from the fuel cell flows, wherein: the condenser is provided on the exhaust reducing gas passage; the burner is configured to perform the combustion using the exhaust reducing gas from which moisture has been removed by the condenser and the air supplied from the combustion air supply unit; the water level changing unit is the combustion air supply unit; and the controller changes the water level in the condensed water tank by activating the combustion air supply unit during an operation stop of the fuel cell system to increase pressure in the exhaust reducing gas passage, and when the water level detector has detected a change of the water level, the controller determines that the water level detector is normally operating.

Here, "during an operation stop of the fuel cell system" denotes a period other than a period in which the electric power generating operation of the fuel cell system is being performed. Specifically, "during an operation stop of the fuel cell system" denotes a period in which the burner is not performing the combustion operation. Therefore, "during the operation stop of the fuel cell system" denotes not only a period in which the electric power generating operation of the fuel cell system is being stopped but also a period in which the burner is not performing the combustion operation at the time of the operation start-up, operation stop, or the like of the fuel cell system.

A fourth aspect of the present invention is configured such that in the third aspect of the present invention, the water level detector has detected a water level equal to or higher than a predetermined water level, the controller activates the combustion air supply unit to change the water level in the condensed water tank, and when the water level detector has detected the change of the water level, the controller determines that the water level detector is normally operating.

Here, "a predetermined water level" defines that the water level detector is detecting the water level, since whether or not the water level detector is normally operating cannot be determined when the water level detector is not detecting the water level in the condensed water tank, to be specific, when there is no water (condensed water) in the condensed water tank or when the water level detector is broken. Therefore, "a predetermined water level" may be arbitrarily set in a range from 0 to a full water level.

A fifth aspect of the present invention is configured such that in any one of the second to fourth aspects of the present invention, the fuel cell system further includes: a discharge water passage which is connected to the water conveyance passage and through which the condensed water is discharged to an outside of the fuel cell system; and an on-off valve provided on the discharge water passage, wherein when the water level detector has detected a water level equal to or higher than a predetermined water level, the controller opens the on-off valve to change the water level in the condensed water tank, and when the water level detector has detected the change of the water level, the controller determines that the water level detector is normally operating.

A sixth aspect of the present invention is configured such that in any one of the second to fifth aspects of the present invention, the fuel cell system further includes: a feed water passage connected to the water conveyance passage; and a feed water valve provided on the feed water passage, wherein: the feed water passage is configured such that water is supplied to the condensed water tank by opening the feed water valve; and when the water level detector has detected a water level lower than a predetermined water level, the controller opens the feed water valve to change the water level in the condensed water tank, and when the water level detector has detected the change of the water level, the controller determines that the water level detector is normally operating.

A seventh aspect of the present invention is configured such that in the sixth aspect of the present invention, a buffer tank is provided on a portion of the feed water passage, and the buffer tank is open to atmosphere.

An eighth aspect of the present invention is configured such that in the seventh aspect of the present invention, the fuel cell system further includes: a decarboxylated condensed water tank configured to store decarboxylated condensed water that is the condensed water having flowed through the degasifier; a purified water tank; a decarboxylated condensed water passage configured to connect the decarboxylated condensed water tank and the purified water tank; a decarboxylated condensed water supply unit provided on the decarboxylated condensed water passage and configured to supply the decarboxylated condensed water in the decarboxylated condensed water passage to the purified water tank; a purifier provided on the decarboxylated condensed water passage and configured to purify the decarboxylated condensed water flowing through the decarboxylated condensed water passage; and a purified water passage configured to connect the purified water tank and the buffer tank, wherein: the purified water passage is configured such that when water in the purified water tank exceeds a predetermined water level, the water flows therethrough; and when the water level detector has detected a water level lower than the predetermined water level, the controller changes the water level in the condensed water tank by activating the decarboxylated condensed water supply unit to supply the water in the purified water tank to the condensed water tank, and when the water level detector has detected the change of the water level, the controller determines that the water level detector is normally operating.

A ninth aspect of the present invention is configured such that in the third aspect of the present invention or the fourth aspect of the present invention, the fuel cell system further includes: a discharge water passage which is connected to the water conveyance passage and through which the condensed water is discharged to an outside of the fuel cell system; and an on-off valve provided on the discharge water passage, wherein when the controller activates the combustion air supply unit to determine that the water level detector is normally operating, and the controller opens the on-off valve, but the water level detector does not detect the change of the water level in the condensed water tank, the controller determines that the on-off valve is abnormal.

With this, the malfunction of the on-off valve can be detected. On this account, the fuel cell system of the ninth aspect of the present invention can perform the water discharging operation more surely than the conventional fuel cell systems and can stably maintain the operating state for a long period of time.

A tenth aspect of the present invention is configured such that in the third aspect of the present invention or the fourth aspect of the present invention, the fuel cell system further includes: a feed water passage connected to the water conveyance passage; and a feed water valve provided on the feed water passage, wherein: the feed water passage is configured such that water is supplied to the condensed water tank by opening the feed water valve; and when the controller activates the combustion air supply unit to determine that the water level detector is normally operating, and the controller opens the feed water valve, but the water level detector does not detect the change of the water level in the condensed water tank, the controller determines that the feed water valve is abnormal.

With this, the malfunction of the feed water valve can be detected. On this account, the fuel cell system of the tenth aspect of the present invention can perform the water discharging operation more surely than the conventional fuel cell systems and can stably maintain the operating state for a long period of time.

An eleventh aspect of the present invention is configured such that in the fifth aspect of the present invention, the fuel cell system further includes: a feed water passage connected to the water conveyance passage; and a feed water valve provided on the feed water passage, wherein the feed water passage is configured such that water is supplied to the condensed water tank by opening the feed water valve; and when the controller opens the on-off valve to determine that the water level detector is normally operating, and the controller opens the feed water valve, but the water level detector does not detect the change of the water level in the condensed water tank, the controller determines that the feed water valve is abnormal.

With this, the malfunction of the feed water valve can be detected. On this account, the fuel cell system of the eleventh aspect of the present invention can perform the water discharging operation more surely than the conventional fuel cell systems and can stably maintain the operating state for a long period of time.

A twelfth aspect of the present invention is configured such that in the sixth aspect of the present invention, the fuel cell system further includes: a discharge water passage which is connected to the water conveyance passage and through which the condensed water is discharged to an outside of the fuel cell system; and an on-off valve provided on the discharge water passage, wherein when the controller opens the feed water valve to determine that the water level detector is normally operating, and the controller opens the on-off valve, but the water level detector does not detect the change of the water level in the condensed water tank, the controller determines that the on-off valve is abnormal.

With this, the malfunction of the on-off valve can be detected. On this account, the fuel cell system of the twelfth aspect of the present invention can perform the water discharging operation more surely than the conventional fuel cell systems and can stably maintain the operating state for a long period of time.

A thirteenth aspect of the present invention is configured such that in the first aspect of the present invention, the fuel cell system further includes an on-off valve provided on the water conveyance passage, wherein: the water conveyance passage is formed such that an upstream end thereof is located on a vertically upper side of a downstream end thereof; and water is sealed in the water conveyance passage by closing the on-off valve.

A fourteenth aspect of the present invention is configured such that in the thirteenth aspect of the present invention, the fuel cell system further includes: a feed water passage connected to a portion of the water conveyance passage, the portion being located upstream of a portion where the on-off valve is provided; and a feed water valve provided on the feed water passage, wherein: the feed water passage is configured such that water is supplied to the condensed water tank by opening the feed water valve; and when the water level detector has detected a water level lower than a predetermined water level, the controller opens the feed water valve to change the water level in the condensed water tank, and when the water level detector has detected the change of the water level, the controller determines that the water level detector is normally operating.

With this, whether or not the water level sensor provided in the condensed water tank is normally operating can be determined, and the fuel cell system can operate stably.

Further, a fifteenth aspect of the present invention is configured such that in the fourteenth aspect of the present invention, when the controller opens the feed water valve to determine that the water level detector is normally operating, and the controller opens the on-off valve, but the water level detector does not detect the change of the water level in the condensed water tank, the controller determines that the on-off valve is abnormal.

With this, the malfunction of the on-off valve can be detected. On this account, the fuel cell system of the fifteenth aspect of the present invention can perform the water discharging operation more surely than the conventional fuel cell systems and can stably maintain the operating state for a long period of time.

Hereinafter, preferred embodiments of the present invention will be explained in reference to the drawings. In the drawings, the same reference signs are used for the same or corresponding components, and a repetition of the same explanation is avoided. Moreover, only components necessary to explain the present invention are shown in the drawings, and the other components are omitted. Further, the present invention is not limited to the embodiments below.

### Embodiment 1

### Configuration of Fuel Cell System

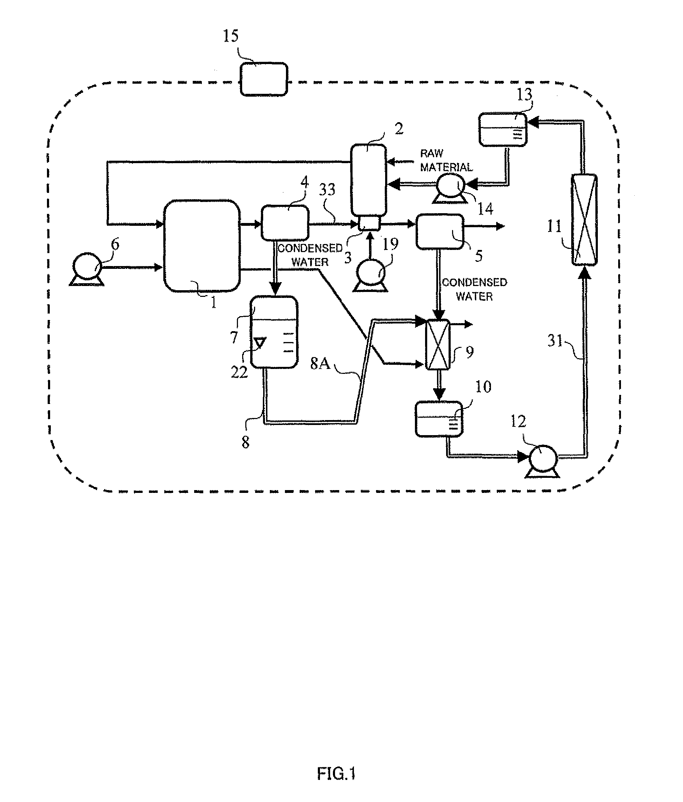

Fig. 1 is a block diagram schematically showing the schematic configuration of a fuel cell system according to Embodiment 1 of the present invention.

As shown in Fig. 1, a fuel cell system 100 according to Embodiment 1 includes a hydrogen generator 2, a burner 3, an air supply device 6, a fuel cell 1, a condenser 4, a condensed water tank 7, a water level detector 22, a degasifier 9, a water conveyance passage 8 including a water sealing structure 8A, a water level changing unit, and a controller 15. The controller 15 causes the water level changing unit to change the water level in the condensed water tank 7, and when the water level detector 22 has detected the change of the water level, the controller 15 determines that the water level detector 22 is normally operating.

Specifically, during an operation stop of the fuel cell system 100, the controller 15 activates a combustion air supply device (combustion air supply unit) 19 to increase the pressure in an exhaust reducing gas passage 33, thereby changing the water level in the condensed water tank 7. When the water level detector 22 has detected the change of the water level, the controller 15 determines that the water level detector 22 is normally operating.

The hydrogen generator 2 includes a reformer. A raw material supply passage is connected to the reformer. A raw material (for example, a natural gas containing methane as a major component) is supplied from a raw material source, not shown, through the raw material supply passage to the reformer. Moreover, a purified water tank 13 is connected to the reformer through a water supply passage. A water supply device 14 is provided on a portion of the water supply passage. Examples of the water supply device 14 are a centrifugal pump, a mixed flow pump, and a reciprocating pump.

Examples of the raw material source are a city gas (natural gas) infrastructure and a LPG bomb. As the raw material, a gas containing an organic compound containing at least carbon and hydrogen as constituent elements can be used. Specifically, examples of the raw material are a gas, such as ethane or propane, containing hydrocarbon and a gas containing gaseous alcohol.

A reforming catalyst (not shown) is provided in an internal space of the reformer and causes a steam-reforming reaction between the raw material supplied through the raw material supply passage and the water supplied from the purified water tank 13 through the water supply passage to generate a hydrogen-containing gas. The hydrogen-containing gas generated in the reformer is supplied as a reducing gas through a fuel gas supply passage to the fuel cell 1.

Since the steam-reforming reaction is an endothermic reaction, heat necessary for the steam-reforming reaction is supplied from the burner 3. Specifically, the combustion air supply device 19 is connected to the burner 3 and supplies combustion air to the burner 3. The combustion air supply device 19 may be anything as long as it can supply the air while adjusting the flow rate of the air. Examples of the combustion air supply device 19 are a reciprocating pump, a turbo fan, and a scroll fan. The combustion air supply device 19 is configured to be able to push down the water level in the below-described reducing agent condensed water tank 7 by its wind pressure.

The burner 3 is configured to receive a combustion gas (combustible gas), such as the raw material, the reducing gas discharged from the reformer, or the exhaust reducing gas unconsumed in the below-described fuel cell 1. The burner 3 combusts the combustible gas and the air to generate a flue gas. Then, the reformer and the like are heated by heat transmission of the flue gas. The flue gas is discharged through a flue gas passage to the outside of the fuel cell system 100 (to the atmosphere). A flue gas condenser 5 is provided on a portion of the flue gas passage. The flue gas condenser 5 condenses steam in the flue gas into water and supplies the condensed water to the degasifier 9. Examples of the flue gas condenser 5 are a plate type heat exchanger and a double pipe type heat exchanger. Further, the condensed water condensed in the flue gas condenser 5 contains a carbonic acid component derived from the hydrogen generator 2.

The air supply device 6 is connected to the fuel cell 1 through an air supply passage. The air supply device 6 may be anything as long as it can supply the air as an oxidizing gas to the fuel cell 1 while adjusting the flow rate of the air. Examples of the air supply device 6 are a reciprocating pump, a turbo fan, and a scroll fan.

The fuel cell 1 includes an anode and a cathode (both of which are not shown). The reducing gas is supplied from the hydrogen generator 2 to the anode, and the oxidizing gas (air) is supplied from the air supply device 6 to the cathode. Then, the fuel cell 1 causes the reducing gas supplied to the anode and the oxidizing gas supplied to the cathode to electrochemically react with each other to generate electricity and heat. Examples of the fuel cell 1 are various fuel cells, such as a polymer electrolyte fuel cell, a phosphoric-acid fuel cell, and a solid-oxide fuel cell. The electric power generated by the fuel cell 1 is converted from DC power into AC power by an electric power converter (not shown), and the voltage thereof is adjusted by the electric power converter. The electric power is then supplied to electric power loads, such as electric lights and various electrical apparatuses.

The oxidizing gas unconsumed in the fuel cell 1 (hereinafter referred to as an "exhaust oxidizing gas") is supplied through an exhaust oxidizing gas passage to the degasifier 9. The exhaust oxidizing gas supplied to the degasifier 9 is discharged to the outside of the fuel cell system 100 after the carbonic acid component contained in the condensed water is degassed.

The reducing gas unconsumed in the fuel cell 1 (hereinafter referred to as an "exhaust reducing gas") is supplied as combustion fuel through the exhaust reducing gas passage 33 to the burner 3. The reducing agent condenser (condenser) 4 is provided on a portion of the exhaust reducing gas passage 33. The reducing agent condenser 4 condenses steam in the exhaust reducing gas into water. The water (condensed water) condensed by the reducing agent condenser 4 flows through a condensed water channel to be stored in the reducing agent condensed water tank 7. Examples of the reducing agent condenser 4 are a plate type heat exchanger and a double pipe type heat exchanger. The exhaust reducing gas contains carbon dioxide derived from the hydrogen generator 2. Therefore, the carbon dioxide is dissolved in the condensed water condensed by the reducing agent condenser 4, and the condensed water contains the carbonic acid component.

The water level sensor (water level detector) 22 is provided in the reducing agent condensed water tank 7. The water level sensor 22 may be anything as long as it can detect the water level in the reducing agent condensed water tank 7 and output the detected water level in the reducing agent condensed water tank 7 to the controller 15. Examples of the water level sensor 22 are a float type water level sensor, an optical interface type water level sensor, an ultrasound type water level sensor, an electrode type water level sensor, and a pressure type water level sensor. As described below, in a case where the operation check of the water level sensor 22 is performed by using the combustion air supply device 19, it is preferable to use as the water level sensor 22, the float type water level sensor, the optical interface type water level sensor, the ultrasound type water level sensor, the electrode type water level sensor, or the like.

The upstream end of the water conveyance passage 8 is connected to a lower portion (herein, a lower surface) of the reducing agent condensed water tank 7, the lower portion being lower than the water surface, and the downstream end of the water conveyance passage 8 is connected to an upper portion of the degasifier 9. As described above, the water conveyance passage 8 includes the water sealing structure 8A. To be specific, the water conveyance passage 8 is formed such that the upstream end thereof is located on a vertically lower side of the downstream end thereof. In addition, the difference in height between the downstream end of the water conveyance passage 8 and a vertically lowest portion of the water conveyance passage 8 is set such that a water head difference becomes equal to or higher than the maximum pressure applied to the reducing agent condensed water tank 7.

In other words, the water conveyance passage 8 includes the water sealing structure 8A if the upstream end thereof is connected to the lower portion, lower than the water surface, of the reducing agent condensed water tank 7 and a vertically highest portion of the water conveyance passage 8 is lower than a connection end of the condensed water channel connected to the reducing agent condensed water tank 7. With this, the upper limit of the water surface of the condensed water stored in the reducing agent condensed water tank 7 becomes the same as the vertically highest portion of the water conveyance passage 8, and excessive condensed water is supplied through the water conveyance passage 8 to the degasifier 9. On this account, the condensed water can be discharged without using a device, such as a shut-off valve. Thus, the cost reduction can be realized.

The degasifier 9 may be anything as long as it can degas the carbonic acid component contained in the condensed water. Examples of the degasifier 9 are a packed tower type and a disperse type. The condensed water degassed by the degasifier 9 (hereinafter referred to as "decarboxylated condensed water") is stored in a decarboxylated condensed water tank 10.

The purified water tank 13 is connected to the decarboxylated condensed water tank 10 through a decarboxylated condensed water passage 3 1. A condensed water supply device (decarboxylated condensed water supply unit) 12 and a purifier 11 are provided on portions of the decarboxylated condensed water passage 31. Examples of the condensed water supply device 12 are a centrifugal pump, a mixed flow pump, and a reciprocating pump. The purifier 11 may be anything as long as it can purify water. Examples of the purifier 11 are an ion-exchange resin and a reverse osmosis membrane. With this, the decarboxylated condensed water stored in the decarboxylated condensed water tank 10 flows through the decarboxylated condensed water passage 31 by the condensed water supply device 12, and various ions and the like are removed from the decarboxylated condensed water by the purifier 11. Then, the decarboxylated condensed water is stored in the purified water tank 13.

The controller 15 may be anything as long as it controls respective devices constituting the fuel cell system 100. For example, the controller 15 includes a calculation processing portion, such as a microprocessor or a CPU, and a storage portion, such as a memory, configured to store programs for executing respective control operations. The controller 15 may be constituted by a single controller or a group of a plurality of controllers which cooperate to execute the control operations of the fuel cell system 100. The controller 15 may be constituted by a microcontroller or may be constituted by a MPU, a PLC (programmable logic controller), a logic circuit, or the like.

In Embodiment 1, the hydrogen-containing gas generated in the reformer of the hydrogen generator 2 is directly supplied to the fuel cell 1. However, the present embodiment is not limited to this. For example, the hydrogen generator 2 may include a shift converter configured to reduce by a shift reaction the carbon monoxide contained in the hydrogen-containing gas generated in the reformer and a CO remover configured to reduce the carbon monoxide by an oxidation reaction, the shift converter and the CO remover being located downstream of the reformer.

### Operations of Fuel Cell System

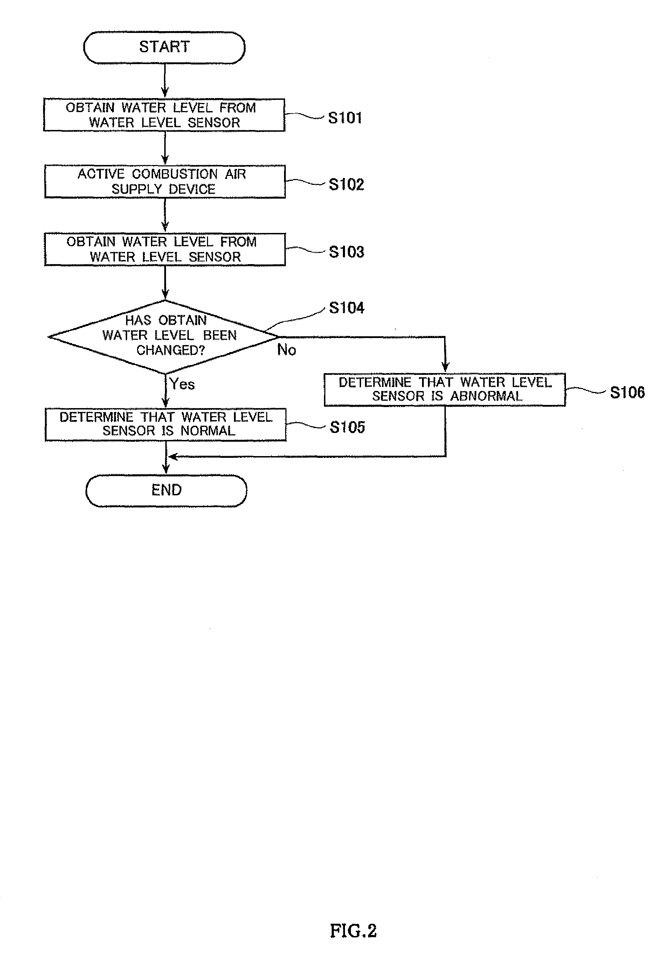

Next, the operations of the fuel cell system 100 according to Embodiment 1 will be explained in reference to Figs. 1 and 2. The following will explain the operation check of the water level sensor 22 in the fuel cell system 100. Since the power generating operation and the like of the fuel cell system 100 are performed in the same manner as common fuel cell systems, explanations thereof are omitted.

Fig. 2 is a flow chart schematically showing the operation check of the water level sensor in the fuel cell system according to Embodiment 1. The operation check of the water level sensor 22 in the fuel cell system 100 is performed during the operation stop of the fuel cell system 100.

As shown in Fig. 2, the controller 15 obtains the water level in the reducing agent condensed water tank 7 from the water level sensor 22 (Step S101). Next, the controller 15 activates the combustion air supply device 19 (Step S102). With this, the combustion air is supplied from the combustion air supply device 19 to the burner 3. At this time, the pressure (wind pressure) applied from the combustion air supply device 19 to the burner 3 is also applied to the condensed water in the reducing agent condensed water tank 7 through the exhaust reducing gas passage 33, the reducing agent condenser 4, and the condensed water channel. Then, as described above, the water conveyance passage 8 connected to the reducing agent condensed water tank 7 is sealed in a watertight manner. On this account, the water level of the condensed water in the reducing agent condensed water tank 7 lowers by the pressure from the combustion air supply device 19.

Next, the controller 15 again obtains the water level in the reducing agent condensed water tank 7 from the water level sensor 22 (Step S103). Then, the controller 15 compares the water level in the reducing agent condensed water tank 7 obtained in Step S101 with the water level in the reducing agent condensed water tank 7 obtained in Step S 103 to determine whether or not the water level in the reducing agent condensed water tank 7 obtained in Step S103 has been changed (Step S104).

Specifically, when the water level in the reducing agent condensed water tank 7 obtained in Step S103 is lower than the water level in the reducing agent condensed water tank 7 obtained in Step S101, the controller 15 determines that the water level has been changed (Yes in Step S104) and determines that the water level sensor 22 is normal (Step S105). In contrast, when the water level in the reducing agent condensed water tank 7 obtained in Step S103 is equal to the water level in the reducing agent condensed water tank 7 obtained in Step S101 or when the water level in the reducing agent condensed water tank 7 obtained in Step S103 is higher than the water level in the reducing agent condensed water tank 7 obtained in Step S101, the controller 15 determines that the water level has not been changed (No in Step S104) and determines that the water level sensor 22 is abnormal (Step S106).

As above, in the fuel cell system 100 according to Embodiment 1, the water conveyance passage 8 includes the water sealing structure 8A. Therefore, by activating the combustion air supply device 19 during the operation stop of the fuel cell system 100, whether or not the water level sensor 22 is normally operating can be determined. In addition, in the fuel cell system 100 according to Embodiment 1, by activating the combustion air supply device 19, whether or not the water level sensor 22 is normally operating can be determined without supplying and discharging the water. On this account, the water self-sustaining operation of the fuel cell system 100 can be further promoted.

Further, in the fuel cell system 100 according to Embodiment 1, if the abnormality of the water level sensor 22 is detected, the start-up of the fuel cell system 100 is stopped during the start-up operation of the fuel cell system 100, and the operation of the fuel cell system 100 is not allowed during the operation stop of the fuel cell system 100. With this, the fuel cell system 100 can operate stably.

The present embodiment is just one example and does not limit the technical scope of the present invention.

### Embodiment 2

### Configuration of Fuel Cell System

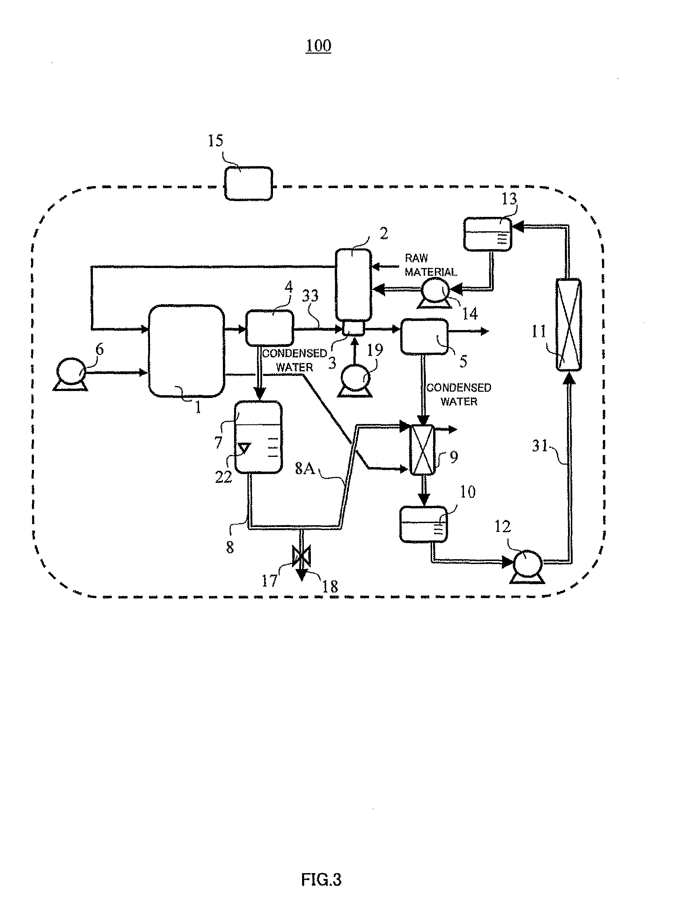

Fig. 3 is a block diagram schematically showing the schematic configuration of the fuel cell system according to Embodiment 2 of the present invention.

As shown in Fig. 3, the fuel cell system 100 according to Embodiment 2 of the present invention is the same in basic configuration as the fuel cell system 100 according to Embodiment 1 but is different from the fuel cell system 100 according to Embodiment 1 in that the fuel cell system 100 according to Embodiment 2 includes a discharge water passage 18 and an on-off valve 17. Specifically, the discharge water passage 18 is connected to the water conveyance passage 8. The condensed water in the reducing agent condensed water tank 7 and the water conveyance passage 8 is discharged through the discharge water passage 18 to the outside of the fuel cell system 100. The on-off valve 17 is provided on a portion of the discharge water passage 18.

### Operations of Fuel Cell System

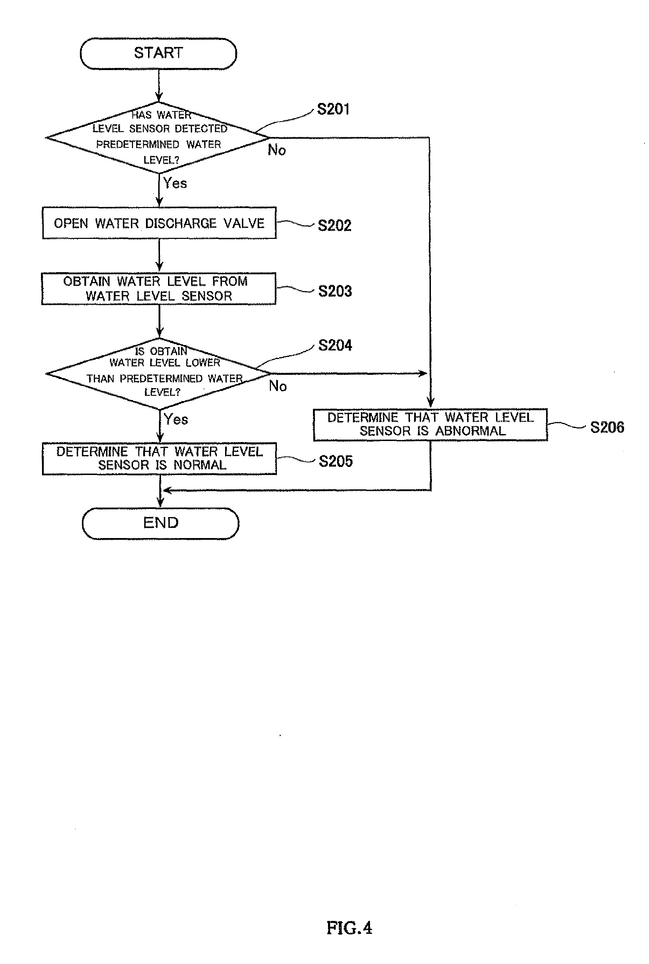

Next, the operations of the fuel cell system 100 according to Embodiment 2 will be explained in reference to Figs. 3 and 4.

Fig. 4 is a flow chart schematically showing the operation check of the water level sensor in the fuel cell system according to Embodiment 2.

As shown in Fig. 4, the controller 15 confirms whether or not the water level sensor 22 has detected the water level in the reducing agent condensed water tank 7 (Step S201). When the water level sensor 22 has not detected a predetermined water level (No in Step S201), the controller 15 determines that the water level sensor 22 is abnormal (Step S206). In contrast, when the water level sensor 22 has detected the predetermined water level (Yes in Step S201), the controller 15 proceeds to Step S202.

In Step S202, the controller 15 opens the on-off valve 17. With this, the condensed water in the reducing agent condensed water tank 7 is discharged through the water conveyance passage 8 and the discharge water passage 18 to the outside of the fuel cell system 100. On this account, the water level in the reducing agent condensed water tank 7 lowers.

Next, the controller 15 obtains the water level in the reducing agent condensed water tank 7 from the water level sensor 22 (Step S203). Then, the controller 15 determines whether or not the water level in the reducing agent condensed water tank 7 obtained in Step S203 is lower than the predetermined water level in the reducing agent condensed water tank 7 (Step S204).

When the water level in the reducing agent condensed water tank 7 obtained in Step S203 is lower than the predetermined water level in the reducing agent condensed water tank 7 (Yes in Step S204), the controller 15 determines that the water level sensor 22 is normal (Step S205). In contrast, when the water level in the reducing agent condensed water tank 7 obtained in Step S203 is equal to the predetermined water level in the reducing agent condensed water tank 7 or when the water level in the reducing agent condensed water tank 7 obtained in Step S203 is higher than the predetermined water level in the reducing agent condensed water tank 7 (No in Step S204), the controller 15 determines that the water level sensor 22 is abnormal (Step S206).

The fuel cell system 100 according to Embodiment 2 configured as above can obtain the same operational advantages as the fuel cell system 100 according to Embodiment 1. The present embodiment is just one example and does not limit the technical scope of the present invention.

### Embodiment 3

### Configuration of Fuel Cell System

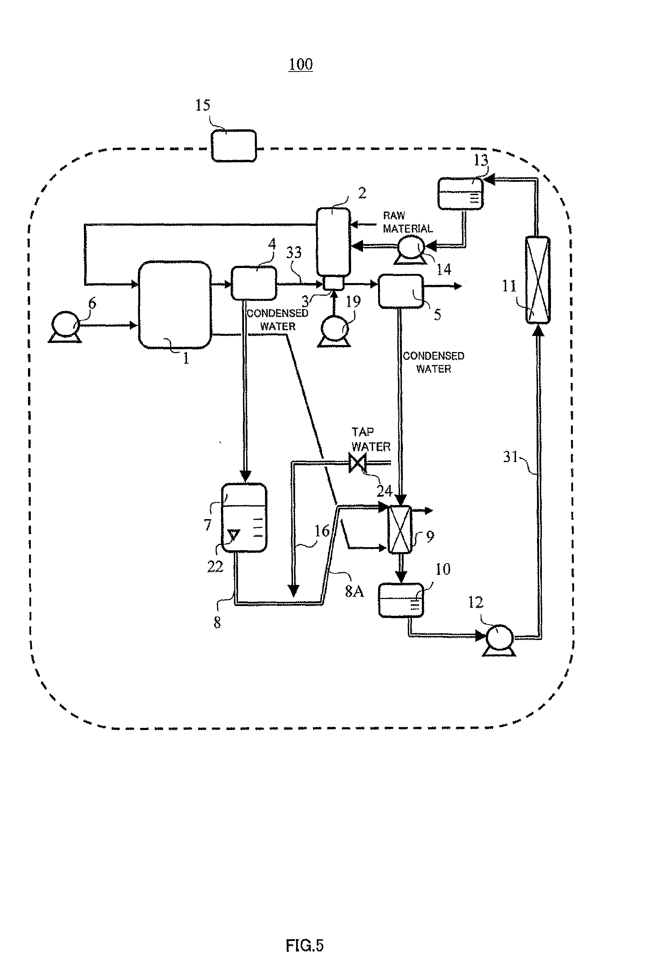

Fig. 5 is a block diagram schematically showing the schematic configuration of the fuel cell system according to Embodiment 3 of the present invention.

As shown in Fig. 5, the fuel cell system 100 according to Embodiment 3 of the present invention is the same in basic configuration as the fuel cell system 100 according to Embodiment 1 but is different from the fuel cell system 100 according to Embodiment 1 in that the fuel cell system 100 according to Embodiment 3 includes a feed water passage 16 and a feed water valve 24. Specifically, the feed water passage 16 is connected to the water conveyance passage 8, and the water is supplied through the feed water passage 16 to the reducing agent condensed water tank 7. The feed water valve 24 is provided on a portion of the feed water passage 16.

### Operations of Fuel Cell System

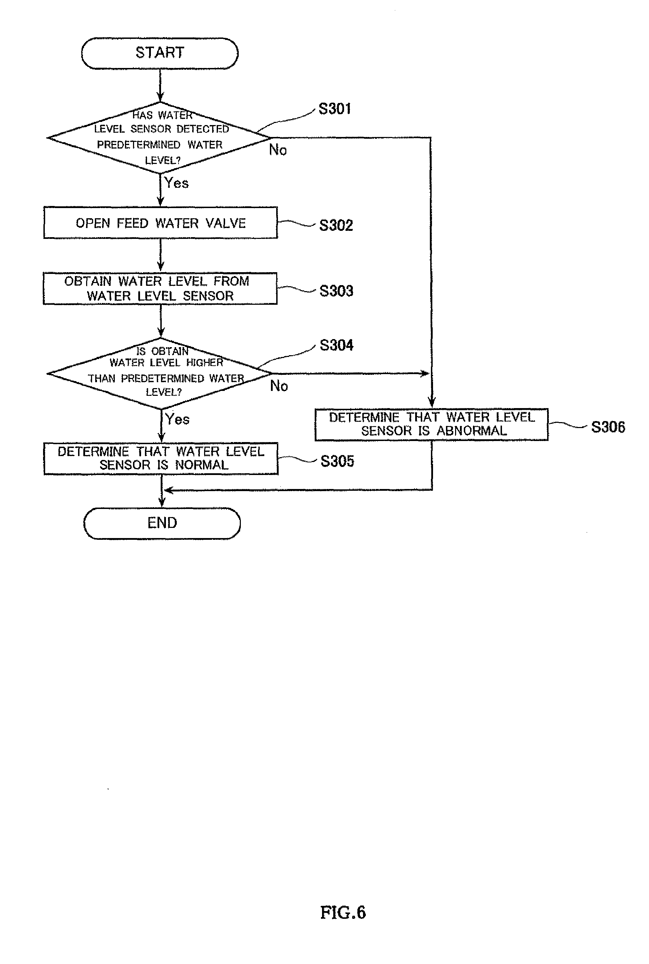

Next, the operations of the fuel cell system 100 according to Embodiment 3 will be explained in reference to Figs. 5 and 6.

Fig. 6 is a flow chart schematically showing the operation check of the water level sensor in the fuel cell system according to Embodiment 3.

As shown in Fig. 6, the controller 15 confirms whether or not the water level sensor 22 has detected the water level in the reducing agent condensed water tank 7 (Step S301). When the water level sensor 22 has not detected the predetermined water level (No in Step S301), the controller 15 determines that the water level sensor 22 is abnormal (Step S306). In contrast, when the water level sensor 22 has detected the predetermined water level (Yes in Step S301), the controller 15 proceeds to Step S302.

In Step S302, the controller 15 opens the feed water valve 24. With this, the water (herein, tap water) is supplied through the feed water passage 16 and the water conveyance passage 8 to the reducing agent condensed water tank 7. Therefore, the water level in the reducing agent condensed water tank 7 rises.

Next, the controller 15 obtains the water level in the reducing agent condensed water tank 7 from the water level sensor 22 (Step S303). Then, the controller 15 determines whether or not the water level in the reducing agent condensed water tank 7 obtained in Step S303 is higher than the predetermined water level in the reducing agent condensed water tank 7 (Step S304).

When the water level in the reducing agent condensed water tank 7 obtained in Step S303 is higher than the predetermined water level in the reducing agent condensed water tank 7 (Yes in Step S304), the controller 15 determines that the water level sensor 22 is normal (Step S305). In contrast, when the water level in the reducing agent condensed water tank 7 obtained in Step S303 is equal to the predetermined water level in the reducing agent condensed water tank 7 or when the water level in the reducing agent condensed water tank 7 obtained in Step S303 is lower than the predetermined water level in the reducing agent condensed water tank 7 (No in Step S304), the controller 15 determines that the water level sensor 22 is abnormal (Step S306).

The fuel cell system 100 according to Embodiment 3 configured as above can obtain the same operational advantages as the fuel cell system 100 according to Embodiment 1. The present embodiment is just one example and does not limit the technical scope of the present invention.

The present embodiment has explained the configuration in which the tap water is supplied through the feed water passage 16 to the water conveyance passage 8. However, the present embodiment is not limited to this. For example, the present embodiment may be configured such that: the purified water tank 13 and the water conveyance passage 8 communicate with each other through the feed water passage 16; and the water in the purified water tank 13 is supplied to the water conveyance passage 8.

In Embodiments 1 to 3, the controller 15 independently controls the combustion air supply device 19, the on-off valve 17, or the feed water valve 24 to determine whether or not the water level sensor 22 is normal. However, Embodiments 1 to 3 are not limited to this. As one example, after (or before) the controller 15 controls the combustion air supply device 19 to determine whether or not the water level sensor 22 is normal, the controller 15 may control at least on of the on-off valve 17 and the feed water valve 24 to determine whether or not the water level sensor 22 is normal. As another example, after (or before) the controller 15 controls the on-off valve 17 to determine whether or not the water level sensor 22 is normal, the controller 15 may control at least one of the on-off valve 17 and the combustion air supply device 19 to determine whether or not the water level sensor 22 is normal. To be specific, the controller 15 may control two or more of the combustion air supply device 19, the on-off valve 17, and the feed water valve 24 to determine whether or not the water level sensor 22 is normal.

### Embodiment 4

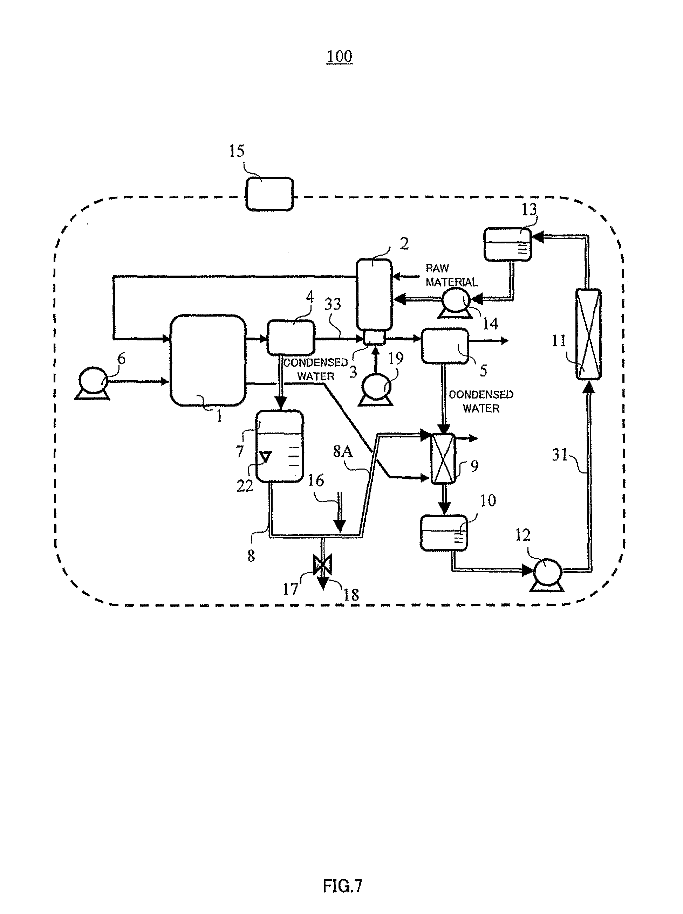

Fig. 7 is a block diagram schematically showing the schematic configuration of the fuel cell system according to Embodiment 4 of the present invention.

As shown in Fig. 7, the fuel cell system 100 according to Embodiment 4 of the present invention is the same in basic configuration as the fuel cell system 100 according to Embodiment 1 but is different from the fuel cell system 100 according to Embodiment 1 in that the fuel cell system 100 according to Embodiment 4 includes: the feed water passage 16 which is connected to the water conveyance passage 8 and through which the water is supplied to the reducing agent condensed water tank 7; the discharge water passage 18 which is connected to the water conveyance passage 8 and through which the water in the reducing agent condensed water tank 7 is discharged to the outside of the system; and the on-off valve 17 which is provided on the discharge water passage 18 and opens when discharging the water.

When the fuel cell system 100 is installed or when the water is discharged from the fuel cell system 100 for maintenance or the like, there is no condensed water in the reducing agent condensed water tank 7. If the fuel cell system 100 operates in this state, the exhaust reducing gas may be discharged through the reducing agent condensed water tank 7 and the water conveyance passage 8 to the outside of the fuel cell system 100. On this account, a minimum amount of water is required to prevent the exhaust reducing gas from being discharged to the outside of the fuel cell system 100.

However, to recover the condensed water from the exhaust reducing gas, the operation of the fuel cell system 100 is required. Therefore, when the fuel cell system 100 according to Embodiment 4 is installed or maintained, a water supply operation of supplying the water through the feed water passage 16 to the reducing agent condensed water tank 7 is performed before the operation of the fuel cell system 100.

By the configuration and operations of the fuel cell system 100 according to Embodiment 4, the water conveyance passage 8 is always filled with the condensed water. Therefore, the exhaust reducing gas is not discharged through the feed water passage 16, and devices, such as a shut-off valve, are not required. Further, after a necessary amount of water is supplied through the water conveyance passage 8 to the reducing agent condensed water tank 7, the water is also supplied through the water conveyance passage 8 to the decarboxylated condensed water tank 10. Therefore, a new feed water passage for the decarboxylated condensed water tank 10 does not have to be provided. With this, the fuel cell system which is reduced in cost and size can be realized.

The present embodiment is just one example and does not limit the technical scope of the present invention.

### Embodiment 5

### Configuration of Fuel Cell System

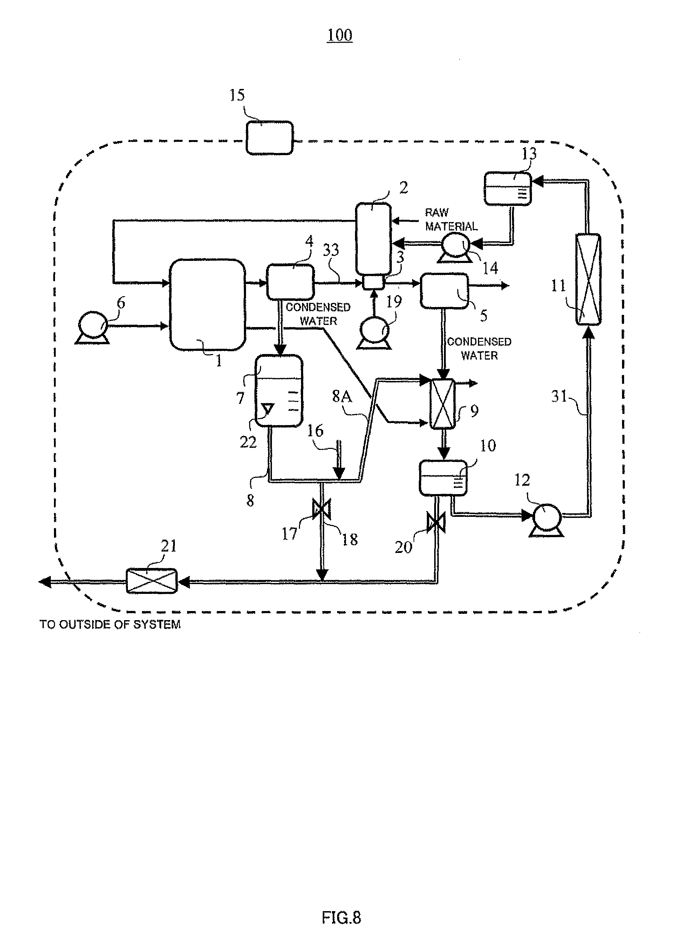

Fig. 8 is a block diagram schematically showing the schematic configuration of the fuel cell system according to Embodiment 5 of the present invention.

As shown in Fig. 8, the fuel cell system 100 according to Embodiment 5 is the same in basic configuration as the fuel cell system 100 according to Embodiment 1 but is different from the fuel cell system 100 according to Embodiment 1 in that the fuel cell system 100 according to Embodiment 5 includes the feed water passage 16, the on-off valve 17, the discharge water passage 18, and a neutralizer 21. Specifically, a decarboxylated condensed water discharge passage through which the decarboxylated condensed water in the decarboxylated condensed water tank 10 is discharged to the outside of the fuel cell system 100 is connected to the decarboxylated condensed water tank 10.

An on-off valve 20 is provided on a portion of the decarboxylated condensed water discharge passage. The downstream end of the discharge water passage 18 is connected to a portion of the decarboxylated condensed water discharge passage, the portion being located downstream of the portion on which the on-off valve 20 is provided. Further, the neutralizer 21 is provided on a portion of the decarboxylated condensed water discharge passage, the portion being located downstream of the portion to which the discharge water passage 18 is connected.

The neutralizer 21 may be anything as long as it can adjust pH when discharging the condensed water to the outside of the fuel cell system 100. One example of the neutralizer 21 is a neutralizing agent type using calcium carbonate or the like.

The feed water passage 16 is connected to a portion of the water conveyance passage 8, and the water is supplied through the feed water passage 16 to the reducing agent condensed water tank 7. The upstream end of the discharge water passage 18 is connected to a portion of the water conveyance passage 8, and the on-off valve 17 is provided on a portion of the discharge water passage 18.

### Operations of Fuel Cell System

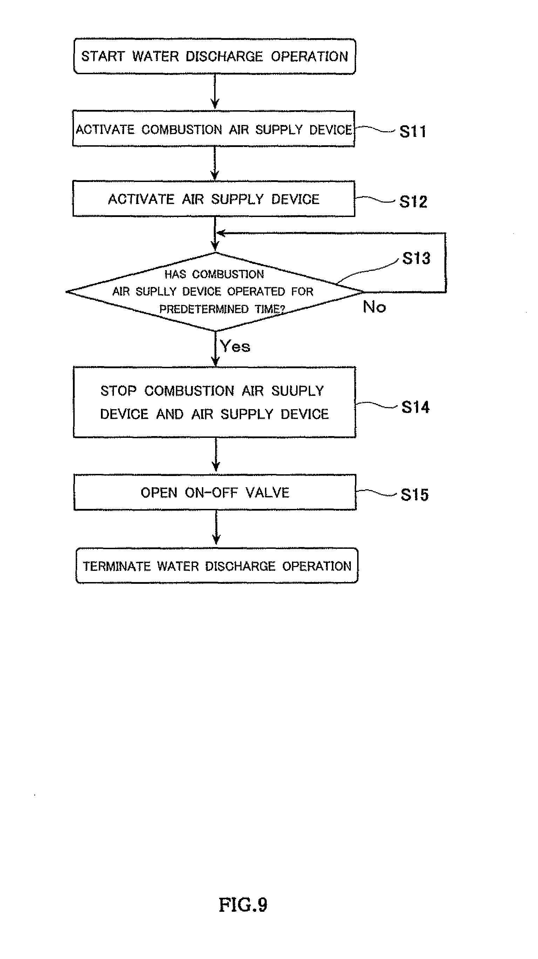

Next, the operations of the fuel cell system 100 according to Embodiment 5 will be explained in reference to the flow chart of Fig. 9.

Fig. 9 is a flow chart schematically showing the water discharging operation in the fuel cell system according to Embodiment 5 of the present invention.

As shown in Fig. 9, when starting discharging the water, the controller 15 first activates the combustion air supply device 19 in Step S 11 to increase the pressure in the burner 3. Since the burner 3 and the reducing agent condensed water tank 7 are connected to each other, the pressure in the reducing agent condensed water tank 7 also increases at the same time. With this, the water level in the reducing agent condensed water tank 7 is pushed down, and the condensed water is supplied through the water conveyance passage 8 and the degasifier 9 to the decarboxylated condensed water tank 10.

Next, in Step S12, the controller 15 causes the air supply device 6 to supply the exhaust oxidizing gas (since the fuel cell 1 is not generating electric power at this moment, the gas is not utilized in the reaction) to the degasifier 9 and causes the degasifier 9 to degas the condensed water supplied from the reducing agent condensed water tank 7.

In Step S13, the controller 15 determines whether or not the application of pressure by the combustion air supply device 19 has continued for a predetermined time. After the application of pressure by the combustion air supply device 19 has continued for the predetermined time, the controller 15 stops the combustion air supply device 19 and the air supply device 6 in Step S14. It is desirable that the predetermined time in Step S 13 be set to a time in which the condensed water is adequately supplied by the combustion air supply device 19. The predetermined time in Step S13 is determined depending on the volumes and structures of the reducing agent condensed water tank 7 and the water conveyance passage 8 and the amount of water supplied. In Step S 15, the controller 15 opens the on-off valve 17 to discharge the condensed water in the reducing agent condensed water tank 7 through the discharge water passage 18 to the outside of the system.

After the condensed water in the reducing agent condensed water tank 7 is degassed by the configuration and operations of the fuel cell system 100 according to Embodiment 5, the condensed water can be discharged to the outside of the system. As a result, the amount of ions neutralized by the neutralizer 21 can be made smaller than a case where all the condensed water in the reducing agent condensed water tank 7 is discharged through the discharge water passage 18 to the outside of the system. On this account, the fuel cell system which improves the durability of the neutralizer 21 and stably maintains the operating state for a long period of time can be realized.

In Embodiment 5, whether or not the condensed water is adequately supplied by the combustion air supply device 19 in Step S13 is determined based on the passage of time. However, the present embodiment is not limited to this. Whether or not the condensed water is adequately supplied by the combustion air supply device 19 in Step S13 may be determined based on the water level in the reducing agent condensed water tank 7 or based on whether or not the water is supplied from the reducing agent condensed water tank 7.

The present embodiment is just one example and does not limit the technical scope of the present invention.

### Modification Example 1

Next, a modification example of the fuel cell system according to Embodiment 5 will be explained.

Since the configuration of the fuel cell system 100 of Modification Example 1 of Embodiment 5 is similar to that of the fuel cell system 100 according to Embodiment 5, an explanation thereof is omitted. As with the fuel cell system 100 according to Embodiment 5, the fuel cell system 100 of Modification Example 1 performs plural times an operation of supplying a predetermined amount of condensed water from the reducing agent condensed water tank 7 to the decarboxylated condensed water tank 10 by the application of pressure by the combustion air supply device 19 to the reducing agent condensed water tank 7 and then supplying the tap water, the amount of which is equal to the predetermined amount of condensed water, through the feed water passage 16 to the reducing agent condensed water tank 7. Since the ion concentration in the condensed water is diluted and neutralized by this operation, the load of the neutralizer 21 when discharging the water can be reduced. Thus, the fuel cell system which improves the durability of the neutralizer 21 and stably maintains the operating state for a long period of time can be realized.

### Embodiment 6

Since the configuration of the fuel cell system 100 according to Embodiment 6 of the present invention is similar to that of the fuel cell system 100 according to Embodiment 5, an explanation thereof is omitted.

### Operations of Fuel Cell System

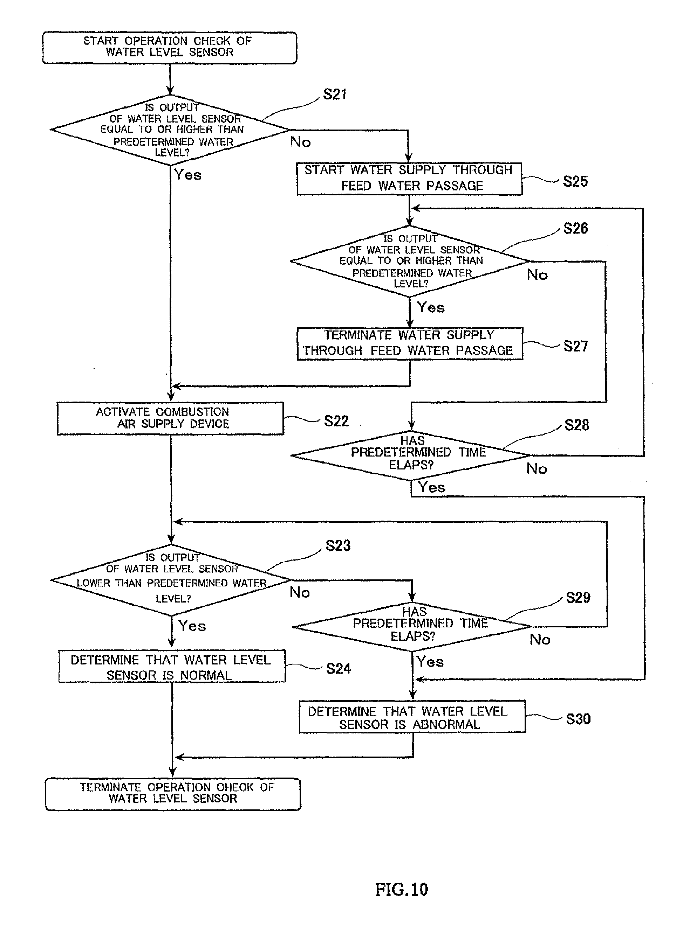

The operations of the fuel cell system 100 according to Embodiment 6 will be explained in reference to the flow chart of Fig. 10.

Fig. 10 is a flow chart schematically showing the operation check of the water level sensor in the fuel cell system according to Embodiment 6.

The operation check of the water level sensor 22 is performed when the burner 3 is not performing combustion, such as when starting a start-up step in which the start of the electric power generating operation of the fuel cell system 100 is prepared or when terminating a stop step in which the stop of the electric power generating operation is prepared.

As shown in Fig. 10, when starting the abnormality check of the water level sensor, the controller 15 first confirms in Step S21 whether or not the water level in the reducing agent condensed water tank 7 is equal to or higher than the predetermined water level. When the water level in the reducing agent condensed water tank 7 is equal to or higher than the predetermined water level (Yes in Step S21), the controller 15 proceeds to Step S22.

When the water level is lower than the predetermined water level (No in Step S21), the controller 15 supplies the water through the feed water passage 16 (Step S25). Specifically, the controller 15 opens a feed water valve (not shown in Fig. 8), provided on the feed water passage 16, to supply the water through the feed water passage 16. Then, when the water level in the reducing agent condensed water tank 7 becomes equal to or higher than the predetermined water level within a predetermined time, the controller 15 proceeds to Step S22 (Steps S26 and S27).

In contrast, when the water level in the reducing agent condensed water tank 7 is lower than the predetermined water level even after the predetermined time has elapsed (Step S28), the controller 15 determines that the water level sensor 22 is abnormal (Step S30). The predetermined time is a time in which the water level in the reducing agent condensed water tank 7 becomes equal to or higher than the predetermined water level by the supply of the water through the feed water passage 16. The predetermined time can be set arbitrarily depending on the volume of the reducing agent condensed water tank 7 and the flow rate of the water supplied through the feed water passage 16.

In Step S22, the controller 15 activates the combustion air supply device 19 to supply the condensed water in the reducing agent condensed water tank 7 through the water conveyance passage 8 to the decarboxylated condensed water tank 10, thereby lowering the water level in the reducing agent condensed water tank 7. Then, when the water level sensor 22 has detected a water level lower than the predetermined water level in Step S23, the controller 15 determines that the water level sensor 22 is normal (Step S24).

In contrast, when the water level in the reducing agent condensed water tank 7 is equal to or higher than the predetermined water level even after a predetermined time has elapsed (No in Step S23), the controller 15 determines that the water level sensor 22 is abnormal (Steps S29 and S30). The predetermined time is a time in which the water level in the reducing agent condensed water tank 7 becomes lower than the predetermined water level by the pressure from the combustion air supply device 19. The predetermined time can be set arbitrarily based on the volume of the reducing agent condensed water tank 7 and the flow rate of the air supplied from the combustion air supply device 19 (the pressure from the combustion air supply device 19).

When the controller 15 determines that the water level sensor 22 is normal in Step S25 to Step S28 and the water level in the reducing agent condensed water tank 7 is equal to or higher than the predetermined water level (No in Step S23), the controller 15 determines that the combustion air supply device 19 is abnormal.

The abnormality of the water level sensor 22 configured to detect the water level in the reducing agent condensed water tank 7 can be detected by the configuration and operations of the fuel cell system of the present embodiment. As a result, the detection of the water level can be surely performed. In the fuel cell system 100 according to Embodiment 6, if the abnormality of the water level sensor 22 is detected, the start-up of the fuel cell system 100 is stopped during the start-up operation of the fuel cell system 100, and the operation of the fuel cell system 100 is not allowed during the operation stop of the fuel cell system 100. With this, the fuel cell system 100 can operate stably.

The present embodiment is just one example and does not limit the technical scope of the present invention.

### Embodiment 7

Since the configuration of the fuel cell system 100 according to Embodiment 7 of the present invention is similar to the fuel cell system 100 according to Embodiment 5, an explanation thereof is omitted.

### Operations of Fuel Cell System

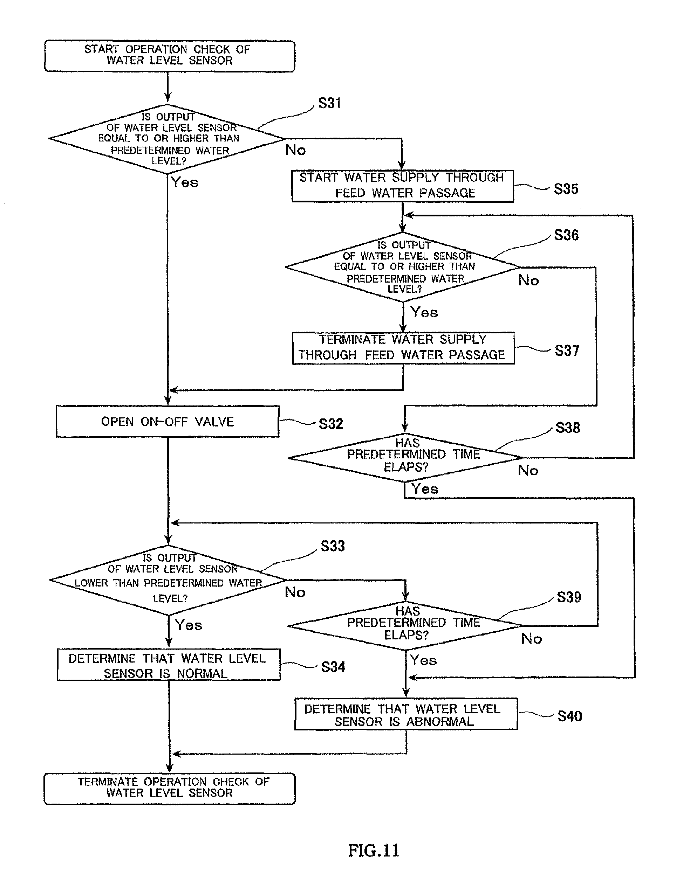

The operation check of the water level sensor in the fuel cell system 100 according to Embodiment 7 will be explained in reference to Fig. 11.

Fig. 11 is a flow chart schematically showing the operation check of the water level sensor in the fuel cell system according to Embodiment 7.

The operation check of the water level sensor 22 is performed when the burner 3 is not performing combustion, such as when starting a start-up step in which the start of the electric power generating operation of the fuel cell system 100 is prepared or when terminating a stop step in which the stop of the electric power generating operation is prepared.

As shown in Fig. 11, when starting the abnormality check of the water level sensor, the controller 15 first confirms in Step S31 whether or not the water level in the reducing agent condensed water tank 7 is equal to or higher than the predetermined water level. When the water level in the reducing agent condensed water tank 7 is equal to or higher than the predetermined water level (Yes in Step S31), the controller 15 proceeds to Step S32.

When the water level in the reducing agent condensed water tank 7 is lower than the predetermined water level, the controller 15 supplies the water through the feed water passage 16 (Step S35). Specifically, the controller 15 opens a feed water valve (not shown in Fig. 8), provided on the feed water passage 16, to supply the water through the feed water passage 16. Then, when the water level in the reducing agent condensed water tank 7 becomes equal to or higher than the predetermined water level within a predetermined time, the controller 15 proceeds to Step S32 (Steps S36 and S37).

In contrast, when the water level in the reducing agent condensed water tank 7 is lower than the predetermined water level even after the predetermined time has elapsed (Step S38), the controller 15 determines that the water level sensor 22 is abnormal (Step S40). The predetermined time is a time in which the water level in the reducing agent condensed water tank 7 becomes equal to or higher than the predetermined water level by the supply of the water through the feed water passage 16. The predetermined time can be set arbitrarily depending on the volume of the reducing agent condensed water tank 7 and the flow rate of the water supplied through the feed water passage 16.

In Step S32, the controller 15 opens the on-off valve 17 to discharge the condensed water in the reducing agent condensed water tank 7 through the discharge water passage 18, thereby lowering the water level in the reducing agent condensed water tank 7. Then, when the water level sensor 22 has detected a water level lower than the predetermined water level in Step S33, the controller 15 determines that the water level sensor 22 is normal (Step S34).

In contrast, when the water level in the reducing agent condensed water tank 7 is equal to or higher than the predetermined water level even after a predetermined time has elapsed (No in Step S33), the controller 15 determines that the water level sensor 22 is abnormal (Steps S39 and S40). The predetermined time is a time in which the water level in the reducing agent condensed water tank 7 becomes lower than the predetermined water level by opening the on-off valve 17. The predetermined time can be set arbitrarily depending on the volume of the reducing agent condensed water tank 7 and the flow rate of the water discharged through the discharge water passage 18.

Even when the application of pressure by the combustion air supply device 19 is small, the abnormality of the water level sensor 22 configured to detect the water level in the reducing agent condensed water tank 7 can be detected by the configuration and operations of the fuel cell system of the present embodiment. As a result, the detection of the water level can be surely performed. In the fuel cell system 100 according to Embodiment 7, if the abnormality of the water level sensor 22 is detected, the start-up of the fuel cell system 100 is stopped during the start-up operation of the fuel cell system 100, and the operation of the fuel cell system 100 is not allowed during the operation stop of the fuel cell system 100. With this, the fuel cell system 100 can operate stably.

The present embodiment is just one example and does not limit the technical scope of the present invention.

### Embodiment 8

### Configuration of Fuel Cell System

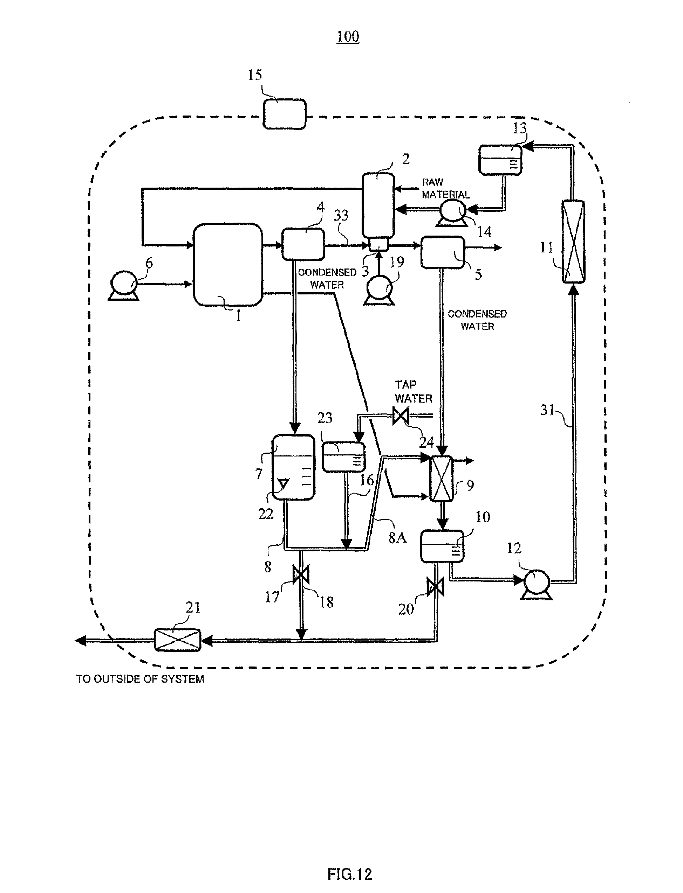

Fig. 12 is a block diagram schematically showing the schematic configuration of the fuel cell system according to Embodiment 8 of the present invention.

As shown in Fig. 12, the fuel cell system 100 according to Embodiment 8 is the same in basic configuration as the fuel cell system 100 according to Embodiment 5 but is different from the fuel cell system 100 according to Embodiment 5 in that the fuel cell system 100 according to Embodiment 8 includes a sub-tank (buffer tank) 23 and the feed water valve 24. Specifically, the sub-tank 23 is open to the atmosphere and provided on the feed water passage 16. The feed water valve 24 is provided on a portion of the feed water passage 16, the portion being located upstream of the portion where the sub-tank 23 is provided. Cross connection between the feed water passage 16 and a tap water passage (water pipe) can be prevented by the sub-tank 23. The feed water valve 24 may be anything as long as it can allow or block the flow of the tap water in the feed water passage 16. One example of the feed water valve 24 is an on-off valve.

### Operations of Fuel Cell System

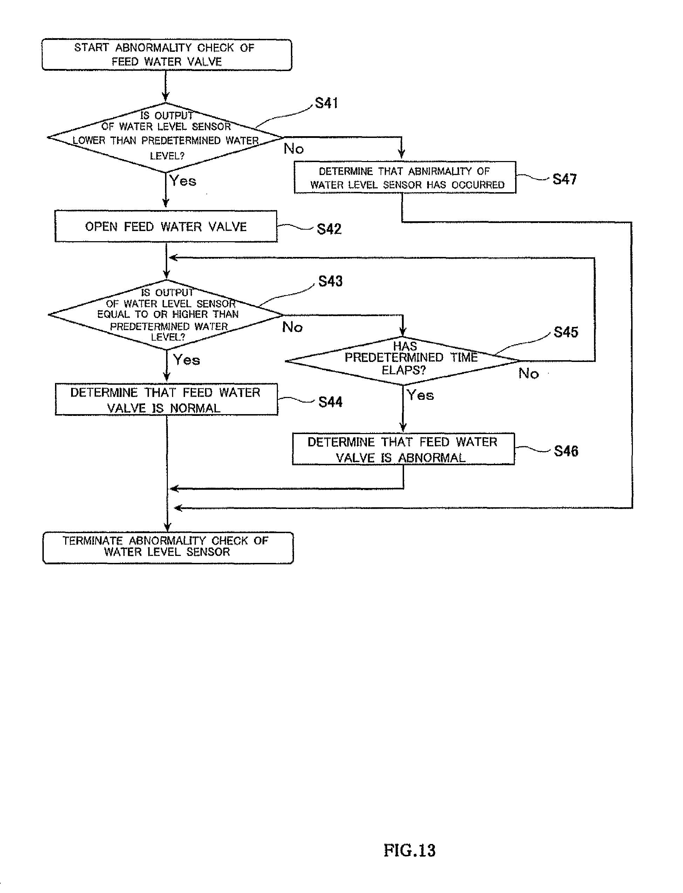

Next, the operations of the fuel cell system 100 according to Embodiment 8 will be explained in reference to the flow chart of Fig. 13.

Fig. 13 is a flow chart schematically showing the operation check of the feed water valve in the fuel cell system according to Embodiment 8.

The operation check of the feed water valve is performed after the above-described operation check of the water level sensor. Therefore, the following explanation is made on the basis that the water level sensor 22 is normal. The following will explain a case where the water level sensor 22 is a float type sensor. The float type sensor cannot detect the rise of the water level when the water level is equal to or higher than a predetermined detectable water level. Therefore, the controller 15 activates, for example, the combustion air supply device 19 to realize a state where the water level in the reducing agent condensed water tank 7 is lower than a predetermined water level or the controller 15 opens the on-off valve 17 to discharge the condensed water in the reducing agent condensed water tank 7, thereby realizing a state where the water level in the reducing agent condensed water tank 7 is lower than the predetermined water level.

As shown in Fig. 13, the controller 15 first confirms in Step S41 that the water level in the reducing agent condensed water tank 7 is lower than the predetermined water level. As described above, at the time of the abnormality check of the feed water valve, the condensed water in the reducing agent condensed water tank 7 is lower than the predetermined water level. Therefore, when the water level is equal to or higher than the predetermined water level in Step S41, the controller 15 determines that the abnormality of the water level sensor 22 has occurred (Step S47).

When the water level in the reducing agent condensed water tank 7 is lower than the predetermined water level (Yes in Step S41), the controller 15 opens the feed water valve 24 in Step S42 to start supplying the water to the reducing agent condensed water tank 7. Then, when the water is stored in the reducing agent condensed water tank 7 and the water level sensor 22 has detected a water level equal to or higher than the predetermined water level within a predetermined time in Step S43, the controller 15 determines that the feed water valve 24 is normal (Step S44). In contrast, when the water level sensor 22 has not detected the water level equal to or higher than the predetermined water level within the predetermined time, the controller 15 determines that the feed water valve 24 is abnormal (Steps S45 and S46).

As described above, Embodiment 8 has explained a case where the water level sensor 22 is the float type sensor. However, the present embodiment is not limited to this. For example, in a case where the water level sensor 22 can sequentially detect the water level in the reducing agent condensed water tank 7, the controller 15 does not have to set a state where the water level in the reducing agent condensed water tank 7 is lower than the predetermined water level. Moreover, in this case, the controller 15 does not have to perform the operation of Step S41.

The malfunction of the feed water valve 24 can be detected by the configuration and operations of the fuel cell system of the present embodiment. As a result, the fuel cell system which can surely perform the water supply operation and stably maintains the operating state for a long period of time can be realized.

The present embodiment is just one example and does not limit the technical scope of the present invention.

### Embodiment 9

### Configuration of Fuel Cell System

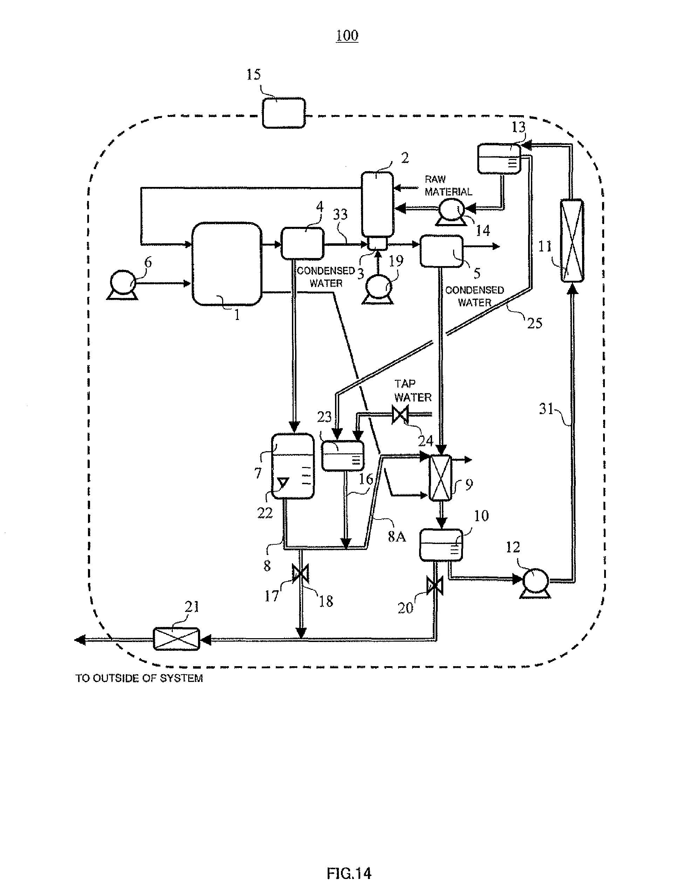

Fig. 14 is a block diagram schematically showing the schematic configuration of the fuel cell system according to Embodiment 9 of the present invention.

As shown in Fig. 14, the fuel cell system 100 according to Embodiment 9 is the same in basic configuration as the fuel cell system 100 according to Embodiment 8 but is different from the fuel cell system 100 according to Embodiment 8 in that the fuel cell system 100 according to Embodiment 9 includes an overflow passage 25 through which the water having overflowed from the purified water tank 13 is supplied to the sub-tank 23.

### Operations of Fuel Cell System

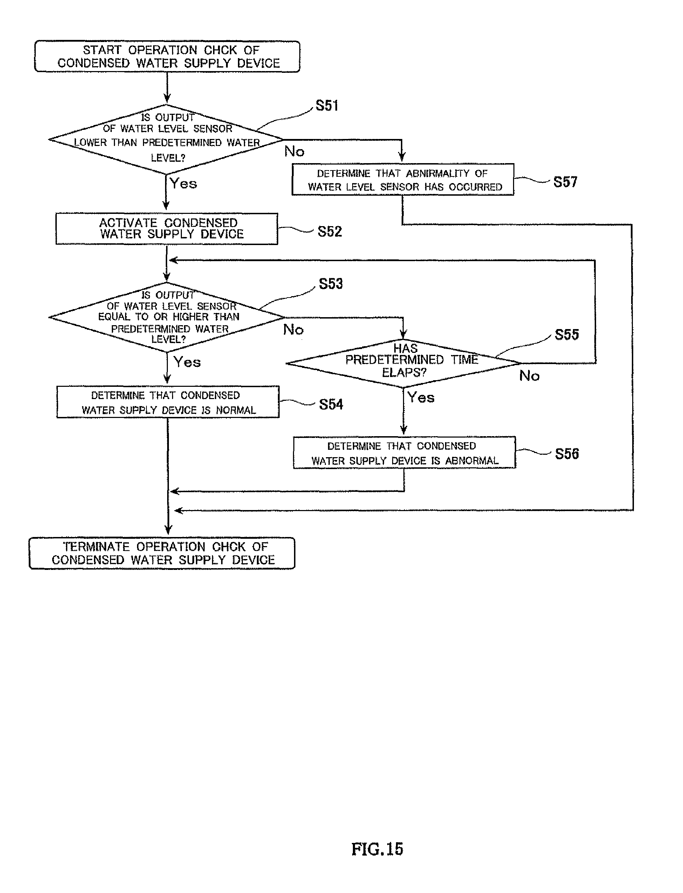

Next, the operations of the fuel cell system 100 according to Embodiment 9 will be explained in reference to the flow chart of Fig. 15.

Fig. 15 is a flow chart schematically showing the operation check of the condensed water supply device in the fuel cell system according to Embodiment 9.

The operation check of the condensed water supply device is performed after the operation check of the water level sensor. Therefore, the following explanation is made on the basis that the water level sensor 22 is normal. The following will explain a case where the water level sensor 22 is the float type sensor. On this account, as with Embodiment 8, the controller 15 controls, for example, the combustion air supply device 19 or the on-off valve 17 to realize a state where the water level in the reducing agent condensed water tank 7 is lower than the predetermined water level.

As shown in Fig. 15, the controller 15 first confirms in Step S51 whether or not the water level in the reducing agent condensed water tank 7 is lower than the predetermined water level. As described above, at the time of the operation check of the condensed water supply device 12, the condensed water in the reducing agent condensed water tank 7 is lower than the predetermined water level. Therefore, when the water level is equal to or higher than the predetermined water level in Step S51, the controller 15 determines that the water level sensor 22 is abnormal (Step S57).

When the water level in the reducing agent condensed water tank 7 is lower than the predetermined water level (Yes in Step S51), the controller 15 activates the condensed water supply device 12 in Step S52 to supply the water to the purified water tank 13, causes the water in the purified water tank 13 to overflow, and supplies the overflowed water through the overflow passage 25, the sub-tank 23, and the feed water passage 16 to the reducing agent condensed water tank 7.

Then, when the water is stored in the reducing agent condensed water tank 7 and the water level sensor 22 has detected a water level equal to or higher than the predetermined water level within a predetermined time (Yes in Step S53), the controller 15 determines that the condensed water supply device 12 is normal (Step S54). If contrast, when the water level sensor 22 has not detected the water level equal to or higher than the predetermined water level within the predetermined time (No in Step S53), the controller 15 determines that the condensed water supply device 12 is abnormal (Steps S55 and S56).
As described above, Embodiment 9 has explained a case where the water level sensor 22 is the float type sensor. However, the present embodiment is not limited to this. For example, in a case where the water level sensor 22 can sequentially detect the water level in the reducing agent condensed water tank 7, the controller 15 does not have to set a state where the water level in the reducing agent condensed water tank 7 is lower than the predetermined water level. Moreover, in this case, the controller 15 does not have to perform the operation of Step S51.

The malfunction of the condensed water supply device 12 can be detected by the configuration and operations of the fuel cell system of the present embodiment. As a result, the fuel cell system which can surely perform the water supply operation and stably maintains the operating state for a long period of time can be realized.

The present embodiment is just one example and does not limit the technical scope of the present invention.

### Embodiment 10

Since the configuration of the fuel cell system 100 according to Embodiment 10 of the present invention is similar to that of the fuel cell system 100 according to Embodiment 9, an explanation thereof is omitted.

### Operations of Fuel Cell System

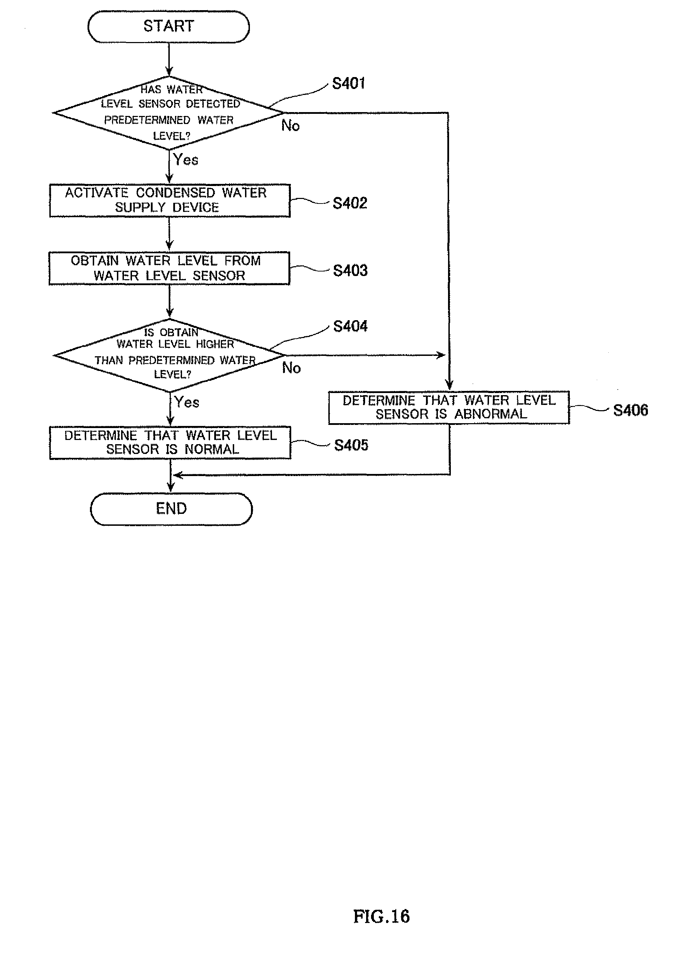

Next, the operations of the fuel cell system 100 according to Embodiment 10 will be explained in reference to Figs. 14 and 16.

Fig. 16 is a flow chart schematically showing the operation check of the water level sensor in the fuel cell system according to Embodiment 10.

As shown in Fig. 16, the controller 15 confirms whether or not the water level sensor 22 has detected the water level in the reducing agent condensed water tank 7 (Step S401). When the water level sensor 22 has not detected the predetermined water level (No in Step S401), the controller 15 determines that the water level sensor 22 is abnormal (Step S406). In contrast, when the water level sensor 22 has detected the predetermined water level (Yes in Step S401), the controller 15 proceeds to Step S402.

In Step S402, the controller 15 activates the condensed water supply device 12. With this, the controller 15 supplies the water to the purified water tank 13 to cause the water in the purified water tank 13 to overflow and supplies the overflowed water through the overflow passage 25, the sub-tank 23, and the feed water passage 16 to the reducing agent condensed water tank 7.

Next, the controller 15 obtains the water level in the reducing agent condensed water tank 7 from the water level sensor 22 (Step S403). Then, the controller 15 determines whether or not the water level in the reducing agent condensed water tank 7 obtained in Step S403 is higher than the predetermined water level in the reducing agent condensed water tank 7 (Step S404).

When the water level in the reducing agent condensed water tank 7 obtained in Step S403 is higher than the predetermined water level in the reducing agent condensed water tank 7 (Yes in Step S404), the controller 15 determines that the water level sensor 22 is normal (Step S405). In contrast, when the predetermined water level in the reducing agent condensed water tank 7 and the water level in the reducing agent condensed water tank 7 obtained in Step S403 are the same as each other or when the water level in the reducing agent condensed water tank 7 obtained in Step S403 is lower than the predetermined water level in the reducing agent condensed water tank 7 (No in Step S404), the controller 15 determines that the water level sensor 22 is abnormal (Step S406).

In Embodiment 10, the operation check of the water level sensor 22 is performed as above. However, the present embodiment is not limited to this. For example, the operation check of the water level sensor 22 in Embodiment 6 or 7 may be performed. In this case, instead of the supply of the water through the feed water passage 16 to the reducing agent condensed water tank 7 by opening the feed water valve in Step S25 (Step S35), the condensed water supply device 12 may be activated to cause the water in the purified water tank 13 to overflow, thereby supplying the overflowed water through the overflow passage 25, the sub-tank 23, and the feed water passage 16 to the reducing agent condensed water tank 7.

In Embodiment 10, the controller 15 independently controls the condensed water supply device 12 to determine whether or not the water level sensor 22 is normal. However, the present embodiment is not limited to this. The controller 15 may control two or more of the combustion air supply device 19, the on-off valve 17, the feed water valve 24, and the condensed water supply device 12 to determine whether or not the water level sensor 22 is normal.

The fuel cell system 100 according to Embodiment 10 configured as above can obtain the same operational advantages as the fuel cell system 100 according to Embodiment 1. The present embodiment is just one example and does not limit the technical scope of the present invention.

### Embodiment 11

Since the configuration of the fuel cell system 100 according to Embodiment 11 of the present invention is similar to that of the fuel cell system 100 according to Embodiment 9, an explanation thereof is omitted.

### Operations of Fuel Cell System

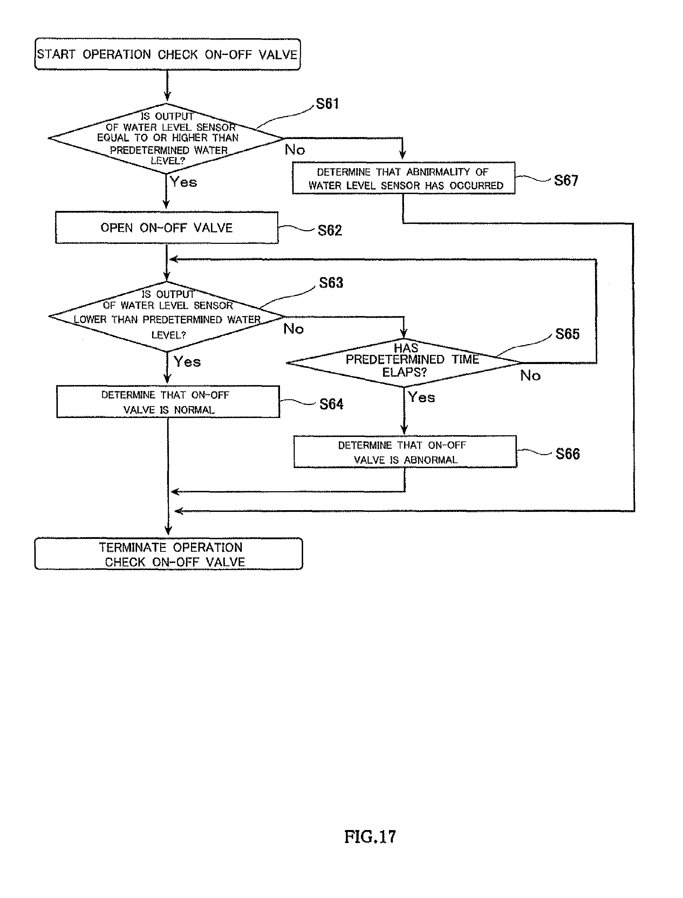

Next, the operations of the fuel cell system 100 according to Embodiment 11 will be explained in reference to Figs. 14 and 17.

Fig. 17 is a flow chart schematically showing the operation check of the on-off valve in the fuel cell system according to Embodiment 11.

The operation check of the on-off valve is performed after the operation check of the water level sensor. Therefore, the following explanation is made on the basis that the water level sensor 22 is normal. The following will explain a case where the water level sensor 22 is the float type sensor. Therefore, the controller 15 controls, for example, the feed water valve 24 or the condensed water supply device 12 to realize a state where the water level in the reducing agent condensed water tank 7 is equal to or higher than the predetermined water level.

As shown in Fig. 17, the controller 15 first confirms in Step S61 whether or not the water level in the reducing agent condensed water tank 7 is equal to or higher than the predetermined water level. As described above, at the time of the operation check of the on-off valve 17, the condensed water in the reducing agent condensed water tank 7 is equal to or higher than the predetermined water level. Therefore, when the water level is lower than the predetermined water level in Step S61, the controller 15 determines that the water level sensor 22 is abnormal (Step S67).

When the water level in the reducing agent condensed water tank 7 is equal to or higher than the predetermined water level (Yes in Step S61), the controller 15 opens the on-off valve 17 in Step S62 to discharge the condensed water in the reducing agent condensed water tank 7 to the outside of the fuel cell system 100.

Then, when the condensed water in the reducing agent condensed water tank 7 is discharged within a predetermined time and the water level sensor 22 has detected a water level lower than the predetermined water level (Yes in Step S63), the controller 15 determines that the on-off valve 17 is normal (Step S64). In contrast, when the water level sensor 22 has not detected the water level lower than the predetermined water level within the predetermined time (No in Step S63), the controller 15 determines that the on-off valve 17 is abnormal (Steps S65 and S66).
As described above, Embodiment 11 has explained a case where the water level sensor 22 is the float type sensor. However, the present embodiment is not limited to this. For example, in a case where the water level sensor 22 can sequentially detect the water level in the reducing agent condensed water tank 7, the controller 15 does not have to set a state where the water level in the reducing agent condensed water tank 7 is equal to or higher than the predetermined water level. Moreover, in this case, the controller 15 does not have to perform the operation of Step S61.

The malfunction of the on-off valve 17 can be detected by the fuel cell system 100 according to Embodiment 11 configured as above. As a result, the fuel cell system which can surely perform the water discharging operation and stably maintains the operating state for a long period of time can be realized. The present embodiment is just one example and does not limit the technical scope of the present invention.

### Embodiment 12

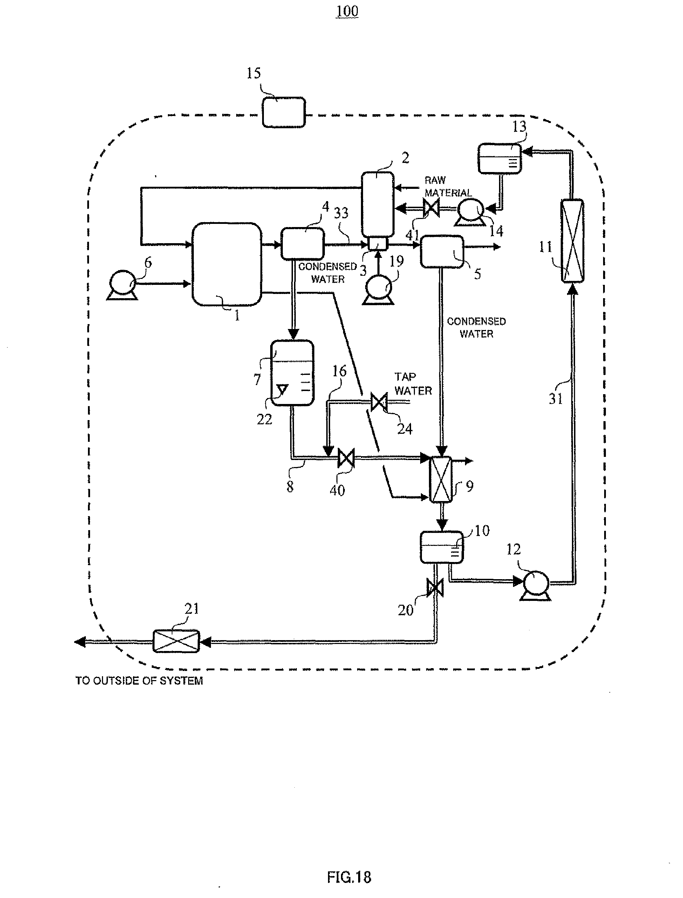

Fig. 18 is a block diagram schematically showing the schematic configuration of the fuel cell system according to Embodiment 12 of the present invention.

As shown in Fig. 18, the fuel cell system 100 according to Embodiment 12 of the present invention is the same in basic configuration as the fuel cell system 100 according to Embodiment 3 but is different from the fuel cell system 100 according to Embodiment 3 in that: an on-off valve 41 is provided on a portion of the water supply passage, the portion being located downstream of the water supply device 14; the water conveyance passage 8 is formed such that the upstream end thereof is located on a vertically upper side of the downstream end thereof; and an on-off valve 40 is provided on a portion of the water conveyance passage 8. Then, the controller 15 closes the on-off valve 40, provided on the portion of the water conveyance passage 8, to seal the water in the water conveyance passage 8. To be specific, in Embodiment 12, the controller 15 and the on-off valve 40 constitute a water sealing structure. When the controller 15 suitably opens the on-off valve 40, the condensed water stored in the reducing agent condensed water tank 7 is supplied through the water conveyance passage 8 to the degasifier 9. Therefore, the sealing between the reducing agent condensed water tank 7 and the degasifier 9 can be more surely realized by using the on-off valve 40.

For example, the operation (the operation check of the water level sensor) of the fuel cell system 100 according to Embodiment 12 may be performed in the same manner as the operation check of the water level sensor in Embodiment 3. In this case, the controller 15 independently controls the feed water valve 24 to determine whether or not the water level sensor 22 is normal. However, the present embodiment is not limited to this. For example, after (or before) the controller 15 controls the feed water valve 24 to determine whether or not the water level sensor 22 is normal, the controller 15 may control the on-off valve 40 to determine whether or not the water level sensor 22 is normal.

The present embodiment is just one example and does not limit the technical scope of the present invention.

### Modification Example 2

Next, a modification example of the fuel cell system 100 according to Embodiment 12 will be explained.

Since the configuration of the fuel cell system 100 of Modification Example 2 is the same as that of the fuel cell system 100 according to Embodiment 12, an explanation thereof is omitted.

### Operations of Fuel Cell System

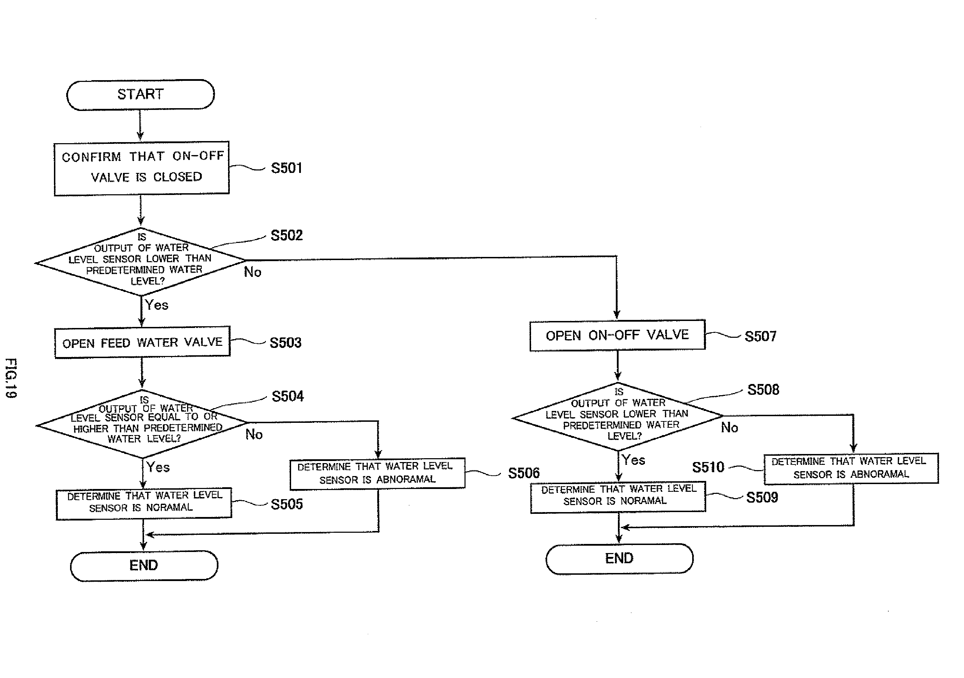

Next, the operations of the fuel cell system 100 of Modification Example 2 will be explained in reference to Fig. 19.

Fig. 19 is a flow chart schematically showing the operation check of the water level sensor in the fuel cell system of Modification Example 2.

As shown in Fig. 19, the controller 15 confirms that the on-off valve 40 is closed (Step S501). Next, the controller 15 determines whether or not the water level in the reducing agent condensed water tank 7 detected by the water level sensor 22 is lower than the predetermined water level (Step S502). When the water level in the reducing agent condensed water tank 7 is lower than the predetermined water level (Yes in Step S502), the controller 15 proceeds to Step S503. When the water level in the reducing agent condensed water tank 7 is equal to or higher than the predetermined water level (No in Step S502), the controller 15 proceeds to Step S507,

In Step S503, the controller 15 opens the feed water valve 24. With this, the water (herein, tap water) is supplied through the feed water passage 16 and the water conveyance passage 8 to the reducing agent condensed water tank 7. Therefore, the water level in the reducing agent condensed water tank 7 rises.

Next, the controller 15 determines whether or not the water level in the reducing agent condensed water tank 7 detected by the water level sensor 22 is equal to or higher than the predetermined water level (Step S504). When the water level in the reducing agent condensed water tank 7 is equal to or higher than the predetermined water level (Yes in Step S504), the controller 15 determines that the water level sensor 22 is normal (Step S505). In contrast, when the water level in the reducing agent condensed water tank 7 is lower than the predetermined water level (No in Step S504), the controller 15 determines that the water level sensor 22 is abnormal (Step S506).

In Step S507, the controller 15 opens the on-off valve 40. With this, the condensed water in the reducing agent condensed water tank 7 is discharged through the water conveyance passage 8 and the degasifier 9 to the decarboxylated condensed water tank 10. On this account, the water level in the reducing agent condensed water tank 7 lowers.

Next, the controller 15 determines whether or not the water level in the reducing agent condensed water tank 7 detected by the water level sensor 22 is lower than the predetermined water level (Step S508). When the water level in the reducing agent condensed water tank 7 is lower than a predetermined water level (Yes in Step S508), the controller 15 determines that the water level sensor 22 is normal (Step S509). In contrast, when the water level in the reducing agent condensed water tank 7 is equal to or higher than the predetermined water level (No in Step S508), the controller 15 determines that the water level sensor 22 is abnormal (Step S510).

The fuel cell system 100 of Modification Example 2 configured as above can obtain the same operational advantages as the fuel cell system 100 according to Embodiment 12.

### Embodiment 13

Since the configuration of the fuel cell system 100 according to Embodiment 13 of the present invention is similar to that of the fuel cell system 100 according to Embodiment 12, an explanation thereof is omitted.

### Operations of Fuel Cell System

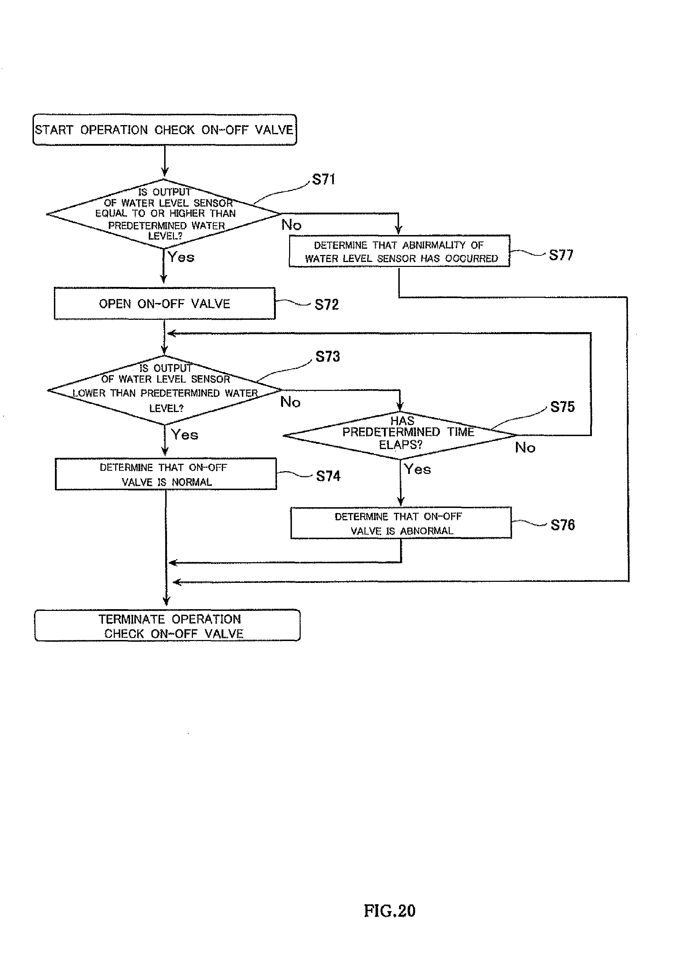

Next, the operations of the fuel cell system 100 according to Embodiment 13 will be explained in reference to Figs. 18 and 20.

Fig. 20 is a flow chart schematically showing the operation check of the on-off valve in the fuel cell system according to Embodiment 13.

The operation check of the on-off valve is performed after the operation check of the water level sensor. Therefore, the following explanation is made on the basis that the water level sensor 22 is normal. The following will explain a case where the water level sensor 22 is the float type sensor. On this account, the controller 15 controls, for example, the feed water valve 24 to realize a state where the water level in the reducing agent condensed water tank 7 is equal to or higher than the predetermined water level.

As shown in Fig. 20, the controller 15 first confirms in Step S71 whether or not the water level in the reducing agent condensed water tank 7 is equal to or higher than the predetermined water level. As described above, at the time of the operation check of the on-off valve 40, the condensed water in the reducing agent condensed water tank 7 is equal to or higher than the predetermined water level. Therefore, when the water level is lower than the predetermined water level in Step S71, the controller 15 determines that the water level sensor 22 is abnormal (Step S77).

When the water level in the reducing agent condensed water tank 7 is equal to or higher than the predetermined water level (Yes in Step S71), the controller 15 opens the on-off valve 40 in Step S72 to supply the condensed water in the reducing agent condensed water tank 7 to the decarboxylated condensed water tank 10.

Then, when the condensed water in the reducing agent condensed water tank 7 is supplied within a predetermined time and the water level sensor 22 has detected a water level lower than the predetermined water level (Yes in Step S73), the controller 15 determines that the on-off valve 40 is normal (Step S74). In contrast, when the water level sensor 22 has not detected the water level lower than the predetermined water level within the predetermined time (No in Step S73), the controller 15 determines that the on-off valve 40 is abnormal (Steps S75 and S76).
As described above, Embodiment 13 has explained a case where the water level sensor 22 is the float type sensor. However, the present embodiment is not limited to this. For example, in a case where the water level sensor 22 can sequentially detect the water level in the reducing agent condensed water tank 7, the controller 15 does not have to realize a state where the water level in the reducing agent condensed water tank 7 is equal to or higher than the predetermined water level. Moreover, in this case, the controller 15 does not have to perform the operation of Step S71.

The malfunction of the on-off valve 40 can be detected by the fuel cell system 100 according to Embodiment 13 configured as above. As a result, the fuel cell system which can surely perform the water discharging operation and stably maintains the operating state for a long period of time can be realized. The present embodiment is just one example and does not limit the technical scope of the present invention.

### Embodiment 14

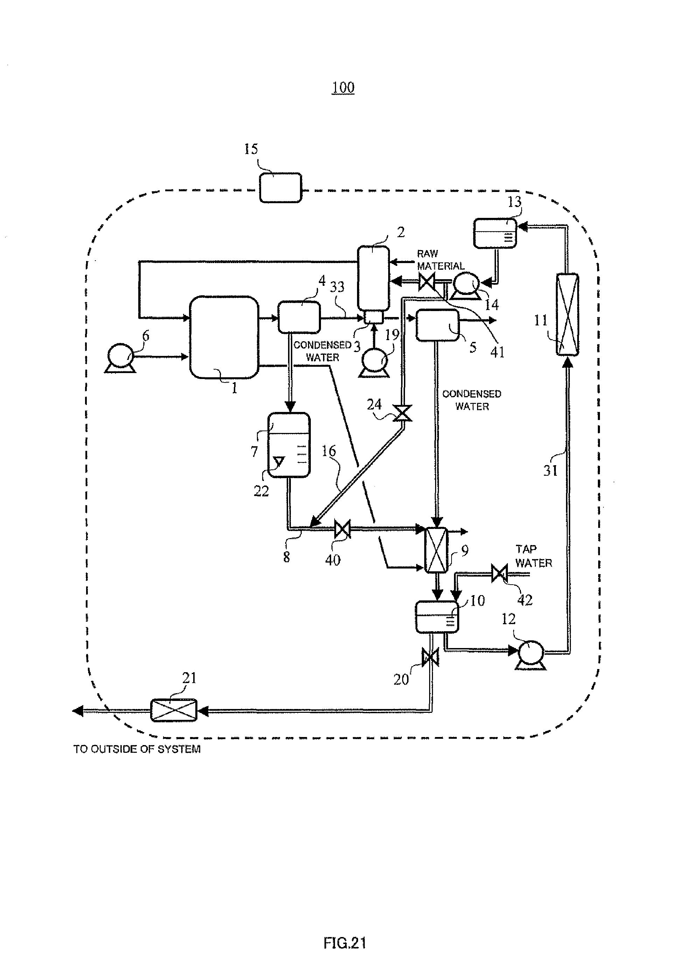

Fig. 21 is a block diagram schematically showing the schematic configuration of the fuel cell system according to Embodiment 14 of the present invention.

As shown in Fig. 21, the fuel cell system 100 according to Embodiment 14 of the present invention is the same in basic configuration as the fuel cell system 100 according to Embodiment 12 but is different from the fuel cell system 100 according to Embodiment 12 in that: the upstream end of the feed water passage 16 is connected to a portion of the water supply passage, the portion being located between the water supply device 14 and the on-off valve 41; a tap water supply passage through which the tap water is supplied is connected to the decarboxylated condensed water tank 10; and an on-off valve 42 is provided on the tap water supply passage. The on-off valve 42 is configured to allow or block the supply of the tap water to the decarboxylated condensed water tank 10.

### Operations of Fuel Cell System

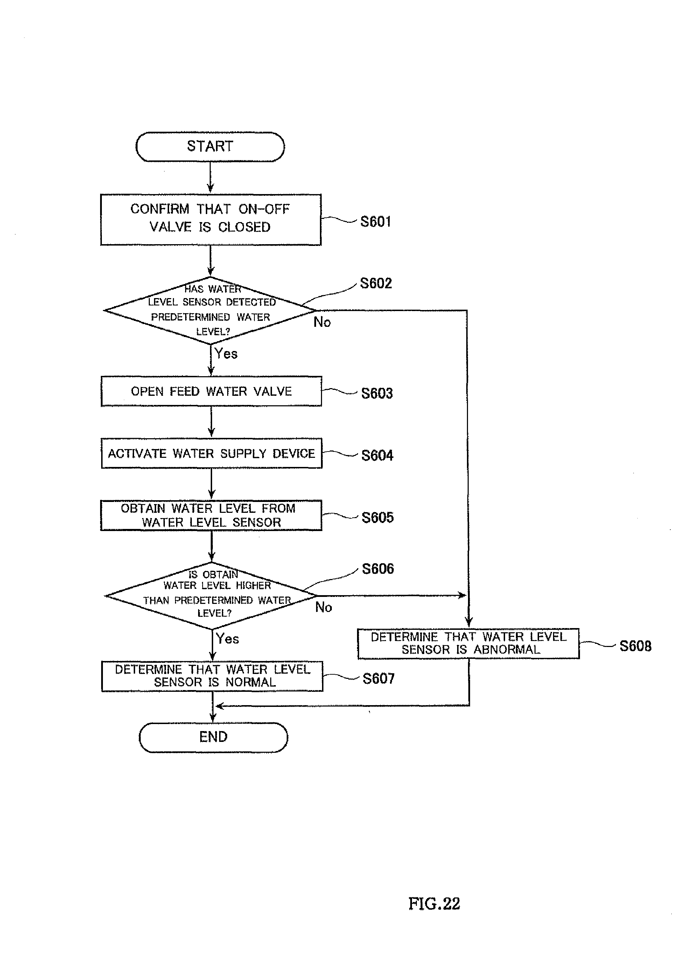

Fig. 22 is a flow chart schematically showing the operation check of the water level sensor in the fuel cell system according to Embodiment 14.

As shown in Fig. 22, the controller 15 confirms that the on-off valve 40 and the on-off valve 41 are closed (Step S601). When the on-off valve 40 and the on-off valve 41 are open, the controller 15 closes these valves 40 and 41.

Next, the controller 15 confirms whether or not the water level sensor 22 has detected the water level in the reducing agent condensed water tank 7 (Step S602). When the water level sensor 22 has not detected the predetermined water level (No in Step S602), the controller 15 determines that the water level sensor 22 is abnormal (Step S608). In contrast, when the water level sensor 22 has detected the predetermined water level (Yes in Step S602), the controller 15 proceeds to Step S603.

In Step S603, the controller 15 opens the feed water valve 24. Next, the controller 15 activates the water supply device 14 (Step S603). When the amount of water in the purified water tank 13 is inadequate, the controller 15 activates the condensed water supply device 12 to supply the water in the decarboxylated condensed water tank 10 to the purified water tank 13. In addition to the purified water tank 13, when the amount of water in the decarboxylated condensed water tank 10 is inadequate, the controller 15 opens the feed water valve 24 to supply the tap water to the decarboxylated condensed water tank 10.

With this, the water in the purified water tank 13 is supplied through the feed water passage 16 and the water conveyance passage 8 to the reducing agent condensed water tank 7. On this account, the water level in the reducing agent condensed water tank 7 rises.

Next, the controller 15 obtains the water level in the reducing agent condensed water tank 7 from the water level sensor 22 (Step S605). Then, the controller 15 determines whether or not the water level in the reducing agent condensed water tank 7 obtained in Step S605 is higher than the predetermined water level in the reducing agent condensed water tank 7 (Step S606).

When the water level in the reducing agent condensed water tank 7 obtained in Step S605 is higher than the predetermined water level in the reducing agent condensed water tank 7 (Yes in Step S606), the controller 15 determines that the water level sensor 22 is normal (Step S607). In contrast, when the predetermined water level in the reducing agent condensed water tank 7 and the water level in the reducing agent condensed water tank 7 obtained in Step S605 are the same as each other or when the water level in the reducing agent condensed water tank 7 obtained in Step S605 is lower than the predetermined water level in the reducing agent condensed water tank 7 (No in Step S606), the controller 15 determines that the water level sensor 22 is abnormal (Step S608).

The fuel cell system 100 according to Embodiment 14 configured as above can obtain the same operational advantages as the fuel cell system 100 according to Embodiment 12. The present embodiment is just one example and does not limit the technical scope of the present invention.

In Embodiment 14, the controller 15 independently controls the feed water valve 24 to determine whether or not the water level sensor 22 is normal. However, the present embodiment is not limited to this. For example, after (or before) the controller 15 controls the feed water valve 24 to determine whether or not the water level sensor 22 is normal, the controller may control the on-off valve 40 to determine whether or not the water level sensor 22 is normal.

From the foregoing explanation, many modifications and other embodiments of the present invention are obvious to one skilled in the art. Therefore, the foregoing explanation should be interpreted only as an example and is provided for the purpose of teaching the best mode for carrying out the present invention to one skilled in the art. The structures and/or functional details may be substantially modified within the spirit of the present invention. In addition, various inventions can be made by suitable combinations of a plurality of components disclosed in the above embodiments.

### Industrial Applicability

According to the fuel cell system and fuel cell system control method of the present invention, whether or not the water level sensor provided in the condensed water tank is normally operating can be determined, and the fuel cell system can operate stably. Therefore, the fuel cell system and fuel cell system control method of the present invention are useful in the fuel cell field.

### Reference Signs List

- 1: fuel cell
- 2: hydrogen generator
- 3: burner
- 4: reducing agent condenser
- 5: flue gas condenser
- 6: air supply device
- 7: reducing agent condensed water tank
- 8: water conveyance passage
- 8A: water sealing structure
- 9: degasifier
- 10: decarboxylated condensed water tank
- 11: purifier
- 12: condensed water supply device
- 13: purified water tank
- 14: water supply device
- 15: controller
- 16: feed water passage
- 17: on-off valve
- 18: discharge water passage
- 19: combustion air supply device
- 20: on-off valve
- 21: neutralizer
- 22: water level sensor
- 23: sub-tank
- 24: feed water valve
- 25: overflow passage
- 31: decarboxylated condensed water passage
- 33: exhaust reducing gas passage
- 40: on-off valve
- 41: on-off valve
- 42: on-off valve
- 100: fuel cell system

## Claims

1. A fuel cell system comprising:
a hydrogen generator configured to generate a hydrogen-containing reducing gas by steam reforming using a raw material gas and water;
a burner configured to perform combustion to generate heat necessary for the steam reforming;
an air supply device configured to supply an oxidizing gas;
a fuel cell configured to cause the reducing gas generated in the hydrogen generator and the oxidizing gas supplied from the air supply device to electrochemically react with each other to generate electric power;
a condenser configured to condense an exhaust reducing gas to recover condensed water, the exhaust reducing gas being discharged from the fuel cell;
a condensed water tank configured to store the condensed water recovered by the condenser;
a water level detector configured to detect a water level in the condensed water tank;
a degasifier configured to remove a carbonic acid component contained in the condensed water by using an exhaust oxidizing gas discharged from the fuel cell;
a water conveyance passage configured to connect the condensed water tank and the degasifier and including a water sealing structure at a portion thereof;
a water level changing unit configured to change the water level of the condensed water in the condensed water tank; and
a controller, wherein
the controller causes the water level changing unit to change the water level in the condensed water tank, and when the water level detector has detected a change of the water level, the controller determines that the water level detector is normally operating.

2. The fuel cell system according to claim 1, wherein the water conveyance passage is formed such that an upstream end thereof is located on a vertically lower side of a downstream end thereof.

3. The fuel cell system according to claim 2, further comprising:
a combustion air supply unit configured to supply combustion air through a combustion air supply passage to the burner; and
an exhaust reducing gas passage which connects the burner and the fuel cell and through which an exhaust reducing gas discharged from the fuel cell flows, wherein:
the condenser is provided on the exhaust reducing gas passage;
the burner is configured to perform the combustion using the exhaust reducing gas from which moisture has been removed by the condenser and the air supplied from the combustion air supply unit;
the water level changing unit is the combustion air supply unit; and
the controller changes the water level in the condensed water tank by activating the combustion air supply unit during an operation stop of the fuel cell system to increase pressure in the exhaust reducing gas passage, and when the water level detector has detected a change of the water level, the controller determines that the water level detector is normally operating.

4. The fuel cell system according to claim 3, wherein when the water level detector has detected a water level equal to or higher than a predetermined water level, the controller activates the combustion air supply unit to change the water level in the condensed water tank, and when the water level detector has detected the change of the water level, the controller determines that the water level detector is normally operating.

5. The fuel cell system according to any one of claims 2 to 4, further comprising:
a discharge water passage which is connected to the water conveyance passage and through which the condensed water is discharged to an outside of the fuel cell system; and
an on-off valve provided on the discharge water passage, wherein
when the water level detector has detected a water level equal to or higher than a predetermined water level, the controller opens the on-off valve to change the water level in the condensed water tank, and when the water level detector has detected the change of the water level, the controller determines that the water level detector is normally operating.

6. The fuel cell system according to any one of claims 2 to 5, further comprising:
a feed water passage connected to the water conveyance passage; and
a feed water valve provided on the feed water passage, wherein:
the feed water passage is configured such that water is supplied to the condensed water tank by opening the feed water valve; and
when the water level detector has detected a water level equal to or higher than a predetermined water level, the controller opens the feed water valve to change the water level in the condensed water tank, and when the water level detector has detected the change of the water level, the controller determines that the water level detector is normally operating.

7. The fuel cell system according to claim 6, wherein:
a buffer tank is provided on a portion of the feed water passage; and
the buffer tank is open to atmosphere.

8. The fuel cell system according to claim 7, further comprising:
a decarboxylated condensed water tank configured to store decarboxylated condensed water that is the condensed water having flowed through the degasifier;
a purified water tank;
a decarboxylated condensed water passage configured to connect the decarboxylated condensed water tank and the purified water tank;
a decarboxylated condensed water supply unit provided on the decarboxylated condensed water passage and configured to supply the decarboxylated condensed water in the decarboxylated condensed water passage to the purified water tank;
a purifier provided on the decarboxylated condensed water passage and configured to purify the decarboxylated condensed water flowing through the decarboxylated condensed water passage; and
a purified water passage configured to connect the purified water tank and the buffer tank, wherein:
the purified water passage is configured such that when water in the purified water tank exceeds a predetermined water level, the water flows therethrough; and
when the water level detector has detected a water level equal to or higher than the predetermined water level, the controller changes the water level in the condensed water tank by activating the decarboxylated condensed water supply unit to supply the water in the purified water tank to the condensed water tank, and when the water level detector has detected the change of the water level, the controller determines that the water level detector is normally operating.

9. The fuel cell system according to claim 3 or 4, further comprising:
a discharge water passage which is connected to the water conveyance passage and through which the condensed water is discharged to an outside of the fuel cell system; and
an on-off valve provided on the discharge water passage, wherein
when the controller activates the combustion air supply unit to determine that the water level detector is normally operating, and the controller opens the on-off valve, but the water level detector does not detect the change of the water level in the condensed water tank, the controller determines that the on-off valve is abnormal.

10. The fuel cell system according to claim 3 or 4, further comprising:
a feed water passage connected to the water conveyance passage; and
a feed water valve provided on the feed water passage, wherein:
the feed water passage is configured such that water is supplied to the condensed water tank by opening the feed water valve; and
when the controller activates the combustion air supply unit to determine that the water level detector is normally operating, and the controller opens the feed water valve, but the water level detector does not detect the change of the water level in the condensed water tank, the controller determines that the feed water valve is abnormal.

11. The fuel cell system according to claim 5, further comprising:
a feed water passage connected to the water conveyance passage; and
a feed water valve provided on the feed water passage, wherein
the feed water passage is configured such that water is supplied to the condensed water tank by opening the feed water valve; and
when the controller opens the on-off valve to determine that the water level detector is normally operating, and the controller opens the feed water valve, but the water level detector does not detect the change of the water level in the condensed water tank, the controller determines that the feed water valve is abnormal.

12. The fuel cell system according to claim 6, further comprising:
a discharge water passage which is connected to the water conveyance passage and through which the condensed water is discharged to an outside of the fuel cell system; and
an on-off valve provided on the discharge water passage, wherein
when the controller opens the feed water valve to determine that the water level detector is normally operating, and the controller opens the on-off valve, but the water level detector does not detect the change of the water level in the condensed water tank, the controller determines that the on-off valve is abnormal.

13. The fuel cell system according to claim 1, further comprising an on-off valve provided on the water conveyance passage, wherein:
the water conveyance passage is formed such that an upstream end thereof is located on a vertically upper side of a downstream end thereof; and
water is sealed in the water conveyance passage by closing the on-off valve.

14. The fuel cell system according to claim 13, further comprising:
a feed water passage connected to a portion of the water conveyance passage, the portion being located upstream of a portion where the on-off valve is provided; and
a feed water valve provided on the feed water passage, wherein:
the feed water passage is configured such that water is supplied to the condensed water tank by opening the feed water valve; and
when the water level detector has detected a water level lower than a predetermined water level, the controller opens the feed water valve to change the water level in the condensed water tank, and when the water level detector has detected the change of the water level, the controller determines that the water level detector is normally operating.

15. The fuel cell system according to claim 14, wherein
when the controller opens the feed water valve to determine that the water level detector is normally operating, and the controller opens the on-off valve, but the water level detector does not detect the change of the water level in the condensed water tank, the controller determines that the on-off valve is abnormal.

16. A method of controlling a fuel cell system,
the fuel cell system comprising:
a hydrogen generator configured to generate a hydrogen-containing reducing gas by steam reforming using a raw material gas and water;
a burner configured to perform combustion to generate heat necessary for the steam reforming;
an air supply device configured to supply an oxidizing gas;
a fuel cell configured to cause the reducing gas generated in the hydrogen generator and the oxidizing gas supplied from the air supply device to electrochemically react with each other to generate electric power;
a condenser configured to condense a reacted exhaust reducing gas to recover condensed water, the reacted exhaust reducing gas being discharged from the fuel cell;
a condensed water tank configured to store the condensed water recovered by the condenser;
a water level detector configured to detect a water level in the condensed water tank;
a degasifier configured to remove a carbonic acid component contained in the condensed water by using a reacted exhaust oxidizing gas discharged from the fuel cell;
a water conveyance passage configured to connect the condensed water tank and the degasifier and including a water sealing structure at a portion thereof; and
a water level changing unit configured to change the water level of the condensed water in the condensed water tank, wherein
the controller causes the water level changing unit to change the water level in the condensed water tank, and when the water level detector has detected a change of the water level, the controller determines that the water level detector is normally operating.

17. The method according to claim 16, wherein:
the fuel cell system further includes
a combustion air supply unit configured to supply combustion air through a combustion air supply passage to the burner, and
an exhaust reducing gas passage which connects the burner and the fuel cell and through which a reacted exhaust reducing gas discharged from the fuel cell flows;
the condenser is provided on the exhaust reducing gas passage;
the burner is configured to perform combustion using the exhaust reducing gas from which moisture has been removed by the condenser and the air supplied from the combustion air supply unit;
the water level changing unit is the combustion air supply unit; and
the controller changes the water level in the condensed water tank by activating the combustion air supply unit during an operation stop of the fuel cell system to increase pressure in the exhaust reducing gas passage, and when the water level detector has detected a change of the water level, the controller determines that the water level detector is normally operating.

18. The method according to claim 17, wherein when the water level detector has detected a water level equal to or higher than a predetermined water level, the controller activates the combustion air supply unit to change the water level in the condensed water tank, and when the water level detector has detected the change of the water level, the controller determines that the water level detector is normally operating.
